# EUROPEAN PATENT APPLICATION

(11) **EP 4 383 111 A1**
(43) Date of publication of application: **12.06.2024**
(21) Application number: 22871974.6
(22) Date of filing: 20.09.2022
(51) Int. Cl.: G06F 21/62, G06F 21/31

(54) **DEVICE CONTROL METHOD, CENTRAL DEVICE, AND APPARATUS**

(30) Priority: 26.09.2021 CN 202111130036
(71) Applicant: Huawei Technologies Co., Ltd., Shenzhen, Guangdong 518129 (CN)
(72) Inventor: LIU, Zaihong, Shenzhen, Guangdong 518129 (CN); GAN, Lu, Shenzhen, Guangdong 518129 (CN)
(74) Representative: Pfenning, Meinig & Partner mbB
(86) International application number: PCT/CN2022/119919
(87) International publication number: WO 2023/045928

(57) **Abstract**

This application is applicable to the field of device control, and provides a device control method and apparatus, and a hub device. In the method provided in this application, when a user exists in a home area, the hub device may obtain a user identity of the user. If the user identity includes a visitor, the hub device may control the hub device and a controllable device to enter a visitor mode, and may assist a silent device in protecting privacy information and/or limiting a sensitive operation, so that the visitor cannot randomly view the privacy information and perform the sensitive operation. This effectively reduces possibilities of privacy disclosure and an unauthorized operation, ensures privacy security and personal and property security of the user, and features high practicability and usability.

## Description

This application claims priority to Chinese Patent Application No. 202111130036.8, filed with the China National Intellectual Property Administration on September 26, 2021 and entitled "DEVICE CONTROL METHOD AND APPARATUS, AND HUB DEVICE", which is incorporated herein by reference in its entirety.

### TECHNICAL FIELD

This application relates to the field of terminal technologies, and in particular, to a device control method and apparatus, and a hub device.

### BACKGROUND

With development of science and technology, an increasing quantity of electronic devices enter thousands of households, improving people's quality of life.

In these electronic devices, some electronic devices may record privacy information of a user. For example, a smart speaker may record a music listening preference of the user, and a smart large screen may record a message left by the user to another family member. Some electronic devices may be related to personal and property security of the user. For example, a camera can monitor whether there is illegal intrusion.

However, these electronic devices usually do not guard against visitors. Therefore, when there is an unfamiliar visitor at home, the unfamiliar visitor may randomly view privacy information of the user, and consequently the privacy information of the user is disclosed to the unfamiliar visitor. In addition, the unfamiliar visitor may perform an operation on a security protection device without authorization. This poses a serious threat to privacy security and personal and property security of the user.

### SUMMARY

Embodiments of this application provide a device control method and apparatus, and a hub device, to resolve a problem that user privacy is easily disclosed and an unauthorized operation occurs because a visitor is not guard against in an existing full-house smart control solution.

According to a first aspect, an embodiment of this application provides a device control method, applied to a hub device. The method includes:
when a user exists in a home area, obtaining a user identity of the user, where the user identity includes a family member and/or a visitor; and
entering a visitor mode when the user identity includes the visitor, and indicating a controllable device to enter the visitor mode; and/or assisting a silent device in protecting privacy information and/or limiting a sensitive operation, where
the controllable device is an electronic device that supports the visitor mode, the visitor mode is used to protect privacy information and/or limit a sensitive operation, and the silent device is an electronic device that does not support the visitor mode.

It should be noted that when a user exists in a home area, the hub device may obtain a user identity of the user. The user identity may include a family member and/or a visitor.

The hub device may receive user characteristics sent by a detection device, and process the user characteristics to obtain the user identity of the user; and/or
the hub device may receive a detection result sent by the detection device, and determine the user identity of the user based on the detection result.

The user characteristics may include one or more types of characteristic data such as facial information, fingerprint data, an access control password, sensor data, and voiceprint data.

After obtaining the user identity of the user, the hub device may identify whether the user identity includes a visitor.

If the foregoing user identity includes a visitor, it indicates that the visitor enters the home area. In this case, to prevent the visitor from viewing privacy information of a family member or performing a sensitive operation without authorization, the hub device may enter the visitor mode, and indicate the controllable device to enter the visitor mode.

The controllable device is an electronic device that supports the visitor mode. The visitor mode is used to protect privacy information and/or limit a sensitive operation.

Moreover, for a silent device that does not support the visitor mode, the hub device may assist the silent device in protecting privacy information and/or limiting a sensitive operation.

According to the foregoing method, the hub device can prevent a visitor from randomly viewing privacy information of a family member and performing a sensitive operation without authorization. This effectively reduces possibilities of privacy disclosure and an unauthorized operation, ensures privacy security and personal and property security of the user, and features strong practicability and usability.

In a possible implementation of the first aspect, the visitor mode includes one or more of the following operations:
anonymizing the privacy information, hiding the privacy information, hiding an access portal of the privacy information, prohibiting the sensitive operation from being performed, hiding an access portal of the sensitive operation, and performing identity verification when the sensitive operation is detected.

It should be noted that, in the visitor mode, the electronic device may protect the privacy information and limit the sensitive operation by using one or more of protection policies such as anonymizing the privacy information, hiding the privacy information, hiding an access portal of the privacy information, shielding the sensitive operation, hiding the access portal of the sensitive operation, and performing identity verification when the sensitive operation is detected.

For example, in some examples, when the electronic device receives a voice message in the visitor mode, the electronic device may anonymize the voice message, and play "You have a new voice message. Please view it on the personal device", to hide detailed content of privacy information, and prompts a family member to check the voice message on the personal device.

In some other examples, when the electronic device enters the visitor mode, privacy information such as an album or contacts may be directly hidden, or an access portal of the privacy information may be hidden, so that a user cannot randomly view privacy information of a family member.

In some other examples, when the electronic device enters the visitor mode, if the electronic device detects a sensitive operation, the electronic device may shield the sensitive operation, and does not respond to the sensitive operation.

In some other examples, when the electronic device enters the visitor mode, the electronic device may directly hide an access portal of a sensitive operation, so that the user cannot enter an operation interface of the sensitive operation and cannot perform the sensitive operation.

In some other examples, when the electronic device enters the visitor mode, if the electronic device detects a sensitive operation, the electronic device may perform identity verification on the user.

If the identity verification succeeds, it indicates that the user performing the sensitive operation is a family member, and the electronic device may respond to the sensitive operation. Alternatively, if the identity verification fails, it indicates that the user performing the sensitive operation is not a family member, and the electronic device may not respond to the sensitive operation.

In some other examples, the electronic device may alternatively use another protection policy to protect privacy information and limit a sensitive operation. A protection policy used by the electronic device is not limited in embodiments of this application.

In a possible implementation of the first aspect, the assisting a silent device in protecting privacy information and/or limiting a sensitive operation includes one or more of the following operations:
when receiving a sensitive message sent to the silent device, anonymizing the sensitive message to obtain an anonymous message, and forwarding the anonymous message to the silent device, where the sensitive message includes the privacy information;
when receiving a sensitive message sent to the silent device, intercepting the sensitive message; and
when receiving a device control instruction sent by the silent device, intercepting the device control instruction, and/or prohibiting an operation corresponding to the device control instruction from being performed.

It should be noted that, when assisting the silent device in protecting the privacy information and/or restricting the sensitive operation, the hub device may select a proper assisting manner based on an actual scenario.

For example, in some examples, when the hub device receives a sensitive message sent to the silent device, because the sensitive message includes privacy information, the hub device may anonymize the sensitive message to hide the privacy information in sensitive information and obtain an anonymous message. Then, the hub device forwards the anonymous message to the silent device, to reduce a possibility that the silent device discloses privacy information of a family member.

In some other examples, when the hub device receives a sensitive message sent to the silent device, the hub device may alternatively directly intercept the sensitive message, and forward the sensitive message to a personal device of a family member, to protect privacy information of the family member.

In some other examples, when the hub device receives a device control instruction sent by the silent device, if the device control instruction is used to control another electronic device, the hub device may directly intercept the device control instruction. Alternatively, if the device control instruction is used to control the hub device, the hub device may not respond to the device control instruction. By intercepting the device control instruction and/or prohibiting the device control instruction from being performed, the hub device can reduce a possibility that a visitor performs a sensitive operation by using the silent device.

In some other examples, the hub device may alternatively assist the silent device in protecting privacy information and/or limiting a sensitive operation in another assisting manner. A specific form of the foregoing assisting manner is not limited in embodiments of this application.

In a possible implementation of the first aspect, after the entering a visitor mode when the user identity includes the visitor, and indicating a controllable device to enter the visitor mode; and/or assisting a silent device in protecting privacy information and/or limiting a sensitive operation, the method includes:
when a preset exit condition is met, exiting the visitor mode, and indicating the controllable device to exit the visitor mode; and/or skipping assisting the silent device in protecting privacy information and/or limiting a sensitive operation.

It should be noted that, when the preset exit condition is met, the hub device may control the hub device and each controllable device to automatically exit the visitor mode, and stop assisting the silent device in protecting privacy information and/or limiting a sensitive operation, so that the user does not need to perform an operation on each electronic device one by one. This reduces operation content of the user, and improves user experience.

In a possible implementation of the first aspect, the preset exit condition includes one or more of the following conditions:
an exit operation of a family member is detected, no user exists in the home area, and no visitor exists in the home area.

It should be noted that the preset exit condition may be set based on an actual requirement. For example, in some examples, the preset exit condition may be that an exit operation of a family member is detected. In this case, if the hub device detects an exit operation, the hub device may perform identity verification on the user. If the identity verification succeeds, the hub device may respond to the exit operation; or if the identity verification fails, the hub device does not respond to the exit operation.

In some other examples, the preset exit condition may be that no user exists in the home area. In this case, if the hub device determines that all users leave the home area, the hub device may control the hub device and each controllable device to automatically exit the visitor mode, and stop assisting the silent device in protecting privacy information and/or limiting a sensitive operation.

In some other examples, the preset exit condition may be that no visitor exists in the home area. In this case, if the hub device determines that all visitors leave the home area, the hub device may control the hub device and each controllable device to automatically exit the visitor mode, and stop assisting the silent device in protecting privacy information and/or limiting a sensitive operation.

In some other examples, the preset exit condition may alternatively be other content. Specific content of the preset exit condition is not limited in embodiments of this application.

In a possible implementation of the first aspect, the visitors include a first-type visitor and a second-type visitor, and an operation permission of the first-type visitor is higher than an operation permission of the second-type visitor.

It should be noted that a type of the foregoing visitor may be set based on an actual requirement. For example, in some embodiments, an administrator (a device vendor or a holder of the hub device) may uniformly define a user other than a family member as a visitor. In some other embodiments, the administrator may classify visitors into a first-type visitor and a second-type visitor. The first-type visitor may be a visitor like a relative or an acquaintance who has a relatively close relationship with the family member. The second-type visitor may be a visitor like an unfamiliar friend, a door-to-door maintenance personnel, or a property management personnel who stops by. The operation permission of the first-type visitor is higher than the operation permission of the second-type visitor. In some other embodiments, the administrator may alternatively classify visitors into a first-level visitor, a second-level visitor, and a third-level visitor, and set a corresponding operation permission for each level of visitor. In some other embodiments, the administrator may alternatively classify types of visitors in another manner. A specific manner in which the administrator classifies types of visitors is not limited in embodiments of this application.

In a possible implementation of the first aspect, the visitor mode includes a first visitor mode and a second visitor mode.

The entering a visitor mode when the user identity includes the visitor, and indicating a controllable device to enter the visitor mode includes:
entering the first visitor mode when the user identity includes the first-type visitor but does not include the second-type visitor, and indicating the controllable device to enter the first visitor mode; and
entering the second visitor mode when the user identity includes the second-type visitor, and indicating the controllable device to enter the second visitor mode.

It should be noted that when the visitor includes the first-type visitor and the second-type visitor, the visitor mode may include the first visitor mode and the second visitor mode.

When the user identity includes the first-type visitor but does not include the second-type visitor, the hub device may control the hub device and the controllable device to enter the first visitor mode having a higher operation permission.

When the user identity includes the second-type visitor, regardless of whether the first-type visitor exists in the home area, the hub device may control the hub device and a visitor device to enter the second visitor mode having a lower operation permission.

According to the foregoing method, the hub device can manage different types of visitors more flexibly, and provide different permissions for different types of visitors, to prevent a low-permission visitor from stealing an operation permission of a high-permission visitor, and protect privacy security and personal and property security of a family member.

In a possible implementation of the first aspect, after the entering the second visitor mode, and indicating the controllable device to enter the second visitor mode, the method further includes:
entering a family member mode when an exit operation of a family member is detected, and indicating the controllable device to enter the family member mode; or
entering the first visitor mode when an exit operation of a family member is detected, and indicating the controllable device to enter the first visitor mode.

It should be noted that when the hub device is in the second visitor mode and the hub device detects an exit operation of the family member, the hub device may control the hub device and the controllable device to directly enter the family mode.

However, if the hub device directly controls the hub device and the controllable device to enter the family member mode, the visitor may steal a permission of the family member, and view privacy information of the family member and/or perform a sensitive operation without authorization.

Therefore, when the hub device is in the second visitor mode, and the hub device detects the exit operation of the family member, the hub device may alternatively control the hub device and the controllable device to enter the first visitor mode. This can meet a requirement of a user for improving a permission of a visitor, and can further prevent the visitor from using the permission of the family member without approval in the family member mode, thereby protecting privacy security and personal and property security of the family member.

In a possible implementation of the first aspect, after the entering a visitor mode when the user includes the visitor, the method further includes:
displaying an authorization code, where the authorization code is used to request a visitor permission from a target device, and the target device is a personal device of the family member.

It should be noted that, in some scenarios, the visitor may intend to use a personal device of the visitor to control an electronic device in the home area.

In this case, the hub device may display the authorization code on a display. The authorization code is used to request a visitor permission from a target device, and the target device is a personal device of the family member.

After the visitor scans the authorization code by using the visitor device (namely, the personal device of the visitor), the visitor device may send an authorization request to the target device.

When the target device agrees to the authorization request, the visitor device can obtain a visitor permission.

When the target device rejects the authorization request, the visitor device cannot obtain a visitor permission.

In a possible implementation of the first aspect, the sensitive operation includes a home management operation and/or a control operation on an electronic device having a security protection function.

It should be noted that the sensitive operation is an operation that may affect personal and property safety of the family member.

Specifically, the sensitive operation may include any one or more of operations such as a family management operation and a control operation on a security protection device.

The family management operation is an operation like changing family information, sharing a permission, or changing a permission. The security protection device is an electronic device having a security protection function.

In a possible implementation of the first aspect, the obtaining a user identity of the user includes:
obtaining user characteristics of the user, and comparing the user characteristics with pre-stored characteristics, to determine the user identity of the user; and/or
receiving a detection result sent by a detection device, and determining the user identity of the user based on the detection result, where the detection device is an electronic device having a user identity detection function.

It should be noted that, after detecting the user characteristics, the detection device may directly send the user characteristics to the hub device.

After receiving the user characteristics, the hub device may compare the user characteristics with the pre-stored characteristics, to determine the user identity of the user.

The pre-stored characteristics refer to pre-stored family information. The family information is used to distinguish the family member from a visitor. The family information may include one or more pieces of information such as an administrator password, facial information of the family member, fingerprint data of the family member, voiceprint data of the family member, and a quantity of family members.

Alternatively, the detection device may locally process the user characteristics, to obtain a detection result. Then, the detection device sends the detection result to the hub device.

When the hub device receives the detection result, the hub device may determine the user identity of the user based on the detection result.

In a possible implementation of the first aspect, when the user characteristics include a quantity of users, and the pre-stored characteristics include a quantity of family members, the obtaining user characteristics of the user, and comparing the user characteristics with pre-stored characteristics, to determine the user identity of the user includes:
comparing the quantity of users with the quantity of family members; and
if the quantity of users is greater than the quantity of family members, determining that the user identity of the user includes the visitor.

It should be noted that the foregoing user characteristics may include the quantity of users, and the foregoing pre-stored characteristics may include the quantity of family members.

When the hub device obtains the quantity of users, the hub device may compare the quantity of users with the quantity of family members.

If the quantity of users is less than or equal to the quantity of family members, it indicates that there may be no visitor in the home area.

If the quantity of users is greater than the quantity of family members, it indicates that a visitor exists in the home area, and the hub device may determine that the user identity of the user includes the visitor.

In a possible implementation of the first aspect, the quantity of family members is determined based on a quantity of people staying in the home area every day during a historical time period.

It should be noted that the quantity of family members may be determined by the hub device based on a quantity of people staying in the home area every day during a historical time period.

For example, it is assumed that the historical time period is a latest week, and the hub device detects that a mode of the quantity of people staying in every day during the time period of the latest week is 3. In this case, the hub device may determine that the quantity of family members is 3.

According to a second aspect, an embodiment of this application provides a device control apparatus, used in a hub device. The apparatus includes:
an identity obtaining module, configured to: when a user exists in a home area, obtain a user identity of the user, where the user identity includes a family member and/or a visitor; and
a visitor protection module, configured to: enter a visitor mode when the user identity includes the visitor, and indicate a controllable device to enter the visitor mode; and/or assist a silent device in protecting privacy information and/or limiting a sensitive operation, where
the controllable device is an electronic device that supports the visitor mode, the visitor mode is used to protect privacy information and/or limit a sensitive operation, and the silent device is an electronic device that does not support the visitor mode.

In a possible implementation of the second aspect, the visitor mode includes one or more of the following operations:
anonymizing the privacy information, hiding the privacy information, hiding an access portal of the privacy information, prohibiting the sensitive operation from being performed, hiding an access portal of the sensitive operation, and performing identity verification when the sensitive operation is detected.

In a possible implementation of the second aspect, the assisting a silent device in protecting privacy information and/or limiting a sensitive operation includes one or more of the following operations:
when a sensitive message sent to the silent device is received, anonymizing the sensitive message to obtain an anonymous message, and forwarding the anonymous message to the silent device, where the sensitive message includes the privacy information;
when a sensitive message sent to the silent device is received, intercepting the sensitive message; and
when a device control instruction sent by the silent device is received, intercepting the device control instruction, and/or prohibiting an operation corresponding to the device control instruction from being performed.

In a possible implementation of the second aspect, the apparatus further includes:
a visitor exit module, configured to: when a preset exit condition is met, exit the visitor mode, and indicate the controllable device to exit the visitor mode; and/or skip assisting the silent device in protecting privacy information and/or limiting a sensitive operation.

In a possible implementation of the second aspect, the preset exit condition includes one or more of the following conditions:
an exit operation of a family member is detected, no user exists in the home area, and no visitor exists in the home area.

In a possible implementation of the second aspect, the visitor includes a first-type visitor and a second-type visitor, and an operation permission of the first-type visitor is higher than an operation permission of the second-type visitor.

In a possible implementation of the second aspect, the visitor mode includes a first visitor mode and a second visitor mode.

The visitor protection module includes:
a first sub-module, configured to: enter the first visitor mode when the user identity includes the first-type visitor but does not include the second-type visitor, and indicate the controllable device to enter the first visitor mode; and
a second sub-module, configured to: enter the second visitor mode when the user identity includes the second-type visitor, and indicate the controllable device to enter the second visitor mode.

In a possible implementation of the second aspect, the apparatus further includes:
a mode switching module, configured to: enter a family member mode when an exit operation of a family member is detected, and indicate the controllable device to enter the family member mode; or
a mode switching module, configured to: enter the first visitor mode when an exit operation of a family member is detected, and indicate the controllable device to enter the first visitor mode.

In a possible implementation of the second aspect, the apparatus further includes:
an authorization display module, configured to display an authorization code, where the authorization code is used to request a visitor permission from a target device, and the target device is a personal device of the family member.

In a possible implementation of the second aspect, the sensitive operation includes a home management operation and/or a control operation on an electronic device having a security protection function.

In a possible implementation of the second aspect, the identity obtaining module is configured to: obtain user characteristics of the user, and compare the user characteristics with pre-stored characteristics, to determine the user identity of the user; and/or
the identity obtaining module is configured to: receive a detection result sent by a detection device, and determine the user identity of the user based on the detection result, where the detection device is an electronic device having a user identity detection function.

In a possible implementation of the second aspect, when the user characteristics include a quantity of users, and the pre-stored characteristics include a quantity of family members, the identity obtaining module includes:
a comparison sub-module, configured to compare the quantity of users with the quantity of family members; and
a determining sub-module, configured to: if the quantity of users is greater than the quantity of family members, determine that the user identity of the user includes the visitor.

In a possible implementation of the second aspect, the quantity of family members is determined based on a quantity of people staying in the home area every day during a historical time period.

According to a third aspect, an embodiment of this application provides a hub device, including a memory, a processor, and a computer program that is stored in the memory and that can be run on the processor. The processor is configured to implement the method according to any one of the first aspect or the possible implementations of the first aspect when executing the computer program.

According to a fourth aspect, an embodiment of this application provides a computer-readable storage medium. The computer-readable storage medium is configured to store a computer program, where when the computer program is executed by a processor, the method according to any one of the first aspect or the possible implementations of the first aspect is implemented.

According to a fifth aspect, an embodiment of this application provides a computer program product, where when the computer program product is configured to run on a control device, the control device is enabled to perform the method according to any one of the first aspect or the possible implementations of the first aspect.

According to a sixth aspect, an embodiment of this application provides a chip system, where the chip system includes a memory and a processor, and the processor is configured to execute a computer program stored in the memory, to implement the method according to any one of the first aspect or the possible implementations of the first aspect.

Compared with the conventional technology, embodiments of this application have the following beneficial effects.

In the device control method of this application, when a hub device determines that a user exists in a home area, the hub device may obtain a user identity of the user. If the foregoing user identity includes a visitor, it indicates that a visitor enters the home area. In this case, to prevent the visitor from viewing privacy information of a family member or performing a sensitive operation without authorization, the hub device may control the hub device and a controllable device to enter a visitor mode, and assist a silent device in protecting the privacy information and/or limiting the sensitive operation.

According to the foregoing device control method, the hub device can prevent a visitor from randomly viewing privacy information of a family member and performing a sensitive operation without authorization. This effectively reduces possibilities of privacy disclosure and an unauthorized operation, ensures privacy security and personal and property security of the user, and features strong practicability and usability.

### BRIEF DESCRIPTION OF DRAWINGS

FIG. 1 is a diagram of a system architecture of a device control system according to an embodiment of this application;
FIG. 2 is a schematic diagram of a structure of an electronic device according to an embodiment of this application;
FIG. 3 is a schematic diagram of a scenario according to an embodiment of this application;
FIG. 4 is a schematic diagram of another scenario according to an embodiment of this application;
FIG. 5 is a schematic diagram of another scenario according to an embodiment of this application;
FIG. 6 is a schematic diagram of another scenario according to an embodiment of this application;
FIG. 7 is a schematic diagram of another scenario according to an embodiment of this application;
FIG. 8 is a schematic diagram of another scenario according to an embodiment of this application;
FIG. 9 is a schematic diagram of another scenario according to an embodiment of this application;
FIG. 10 is a schematic diagram of another scenario according to an embodiment of this application;
FIG. 11 is a schematic diagram of another scenario according to an embodiment of this application;
FIG. 12 is a schematic diagram of another scenario according to an embodiment of this application;
FIG. 13 is a schematic diagram of another scenario according to an embodiment of this application;
FIG. 14 is a schematic diagram of another scenario according to an embodiment of this application;
FIG. 15 is a schematic diagram of another scenario according to an embodiment of this application;
FIG. 16 is a schematic diagram of another scenario according to an embodiment of this application;
FIG. 17 is a schematic diagram of another scenario according to an embodiment of this application;
FIG. 18 is a schematic diagram of another scenario according to an embodiment of this application;
FIG. 19 is a schematic diagram of another scenario according to an embodiment of this application;
FIG. 20 is a schematic diagram of another scenario according to an embodiment of this application;
FIG. 21 is a schematic diagram of another scenario according to an embodiment of this application;
FIG. 22 is a schematic flowchart of a device control method according to an embodiment of this application; and
FIG. 23 is a schematic diagram of a structure of a device control apparatus according to an embodiment of this application.

### DESCRIPTION OF EMBODIMENTS

In the following description, for illustration instead of limitation, specific details such as a particular system structure and a technology are provided to facilitate a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should be further understood that the term "and/or" used in the specification and the appended claims of this application refers to any combination and all possible combinations of one or more associated listed items, and includes these combinations.

As used in the specification and the appended claims of this application, the term "if" may be interpreted as "when" or "once" or "in response to determining" or "in response to detecting" depending on the context. Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of the specification and the appended claims of this application, the terms "first", "second", "third", and the like are merely used for differentiation and description, and shall not be understood as an indication or implication of relative importance.

Reference to "an embodiment", "some embodiments", or the like described in the specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

With development of science and technology, an increasing quantity of electronic devices enter thousands of households, improving people's quality of life.

In these electronic devices, some electronic devices may record privacy information of a user. Some electronic devices may be related to personal and property security of the user.

For example, a smart speaker may record information about a historical song listening record of the user, a favorite singer of the user, a favorite song of the user, and the like; and a smart large screen may record information about a message of the user, a historical program watching record of the user, a favorite actor of the user, and the like. In this way, the smart speaker and smart large screen can provide personalized recommendation based on the information, and recommend songs or movies that meet user preferences to users. A security protection device (namely, an electronic device having a security protection function) like a camera, an intelligent door lock, or a visual doorbell can monitor whether there is illegal intrusion.

However, the electronic devices described above usually do not guard against visitors. Therefore, when there is an unfamiliar visitor at home, the unfamiliar visitor may randomly view privacy information of the user, and/or perform an operation on a security protection device without authorization. This poses a serious threat to privacy security and personal and property security of the user.

For example, in some scenarios, when an unfamiliar friend visits home, if the user and the friend watch a smart large screen, the smart large screen may provide personalized recommendation for the user. This exposes user's video watching preference, and makes the user feel embarrassed. In some other scenarios, during door-to-door maintenance, maintenance personnel may turn off security protection devices such as a camera without the user's attention to steal user's property, causing property loss to the user.

In view of this, an embodiment of this application provides a device control method. When detecting a visitor, a hub device may control each smart home device in a local area network to enter a visitor mode, to protect privacy security and personal and property security of a user. This features high usability and practicability.

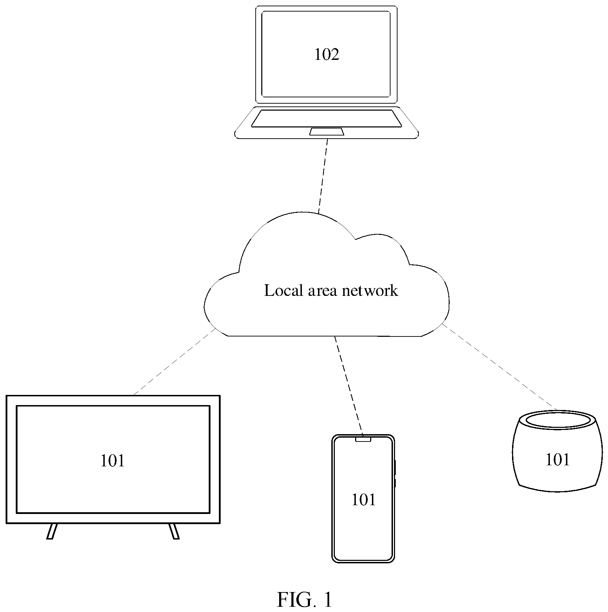

First, refer to FIG. 1. FIG. 1 shows an example of a device control system to which embodiments of this application are applicable.

As shown in FIG. 1, the device control system may include one or more smart home devices 101 (only three are shown in FIG. 1) and one or more hub devices 102 (only one is shown in FIG. 1).

The smart home device 101 may include one or more types of electronic devices such as a desktop computer, a notebook computer, a tablet computer, a mobile phone, a smart television, a smart large screen, a smart speaker, a smart air conditioner, a robotic vacuum cleaner, a dishwasher, a smart lamp, an intelligent door lock, a smart curtain, a router, a lidar, a millimeter-wave radar, an intelligent door lock, and a visual doorbell.

The hub device 102 is an electronic device that can control the smart home device 101. The hub device 102 and the smart home device 101 may be located in a same local area network, and/or the hub device 102 may be a cloud server.

When the hub device 102 is located in a local area network, the hub device 102 may be a home hub control electronic device specially configured to control a full-house smart home device 101. Alternatively, the hub device 102 may be a smart home device 101 on which home hub software is installed. The home hub software may enable an existing smart home device 101 (for example, a router or a smart large screen) in a home to implement control and intelligent decision-making on the full-house smart home device 101 based on an existing function of the existing smart home device 101.

For example, in some scenarios, the hub device 102 may be a central control screen, and a user may control the smart home device 101 by using the central control screen. In some other scenarios, the hub device 102 may be a smart large screen on which home hub software is installed, and the user may control another smart home device 101 by using the smart large screen. In some other scenarios, the hub device 102 may be a smart speaker on which home hub software is installed, and the user may control another smart home device 101 by using the smart speaker. In some other scenarios, the hub device 102 may be a cloud server, and the user may control the smart home device 101 in the local area network by using the cloud server and a wide area network.

The smart home device 101 and the hub device 102 may perform data exchange with each other through one or more of communication connections such as a Wi-Fi connection, a Bluetooth connection, a universal serial bus (universal serial bus, USB) connection, a Registered Jack 45 (Registered Jack 45, RJ45) connection, and power line communication (power line communication, PLC).

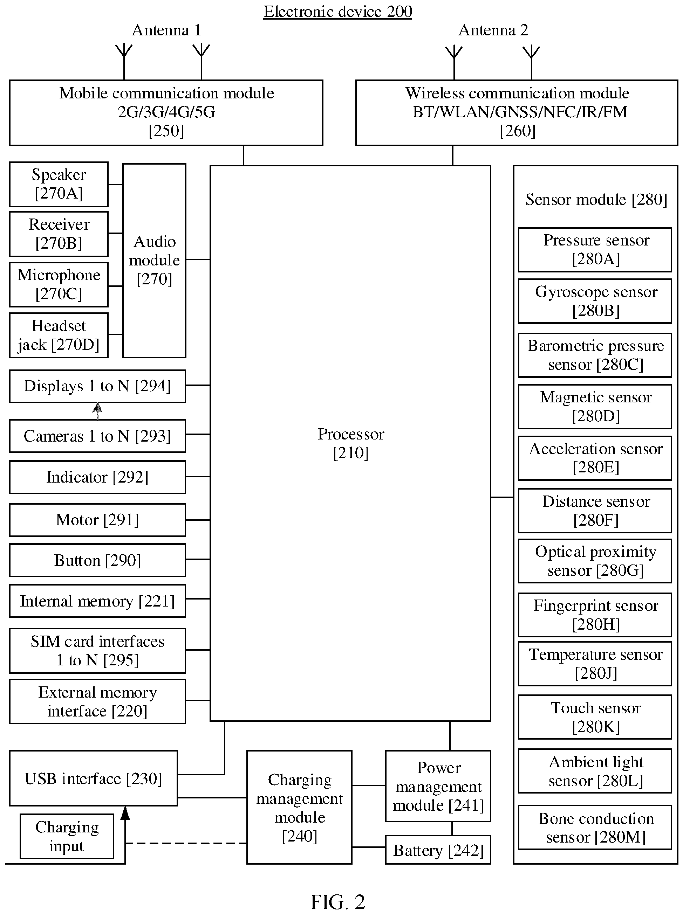

FIG. 2 is an example of a schematic diagram of a structure of an electronic device 200 according to an embodiment of this application. The electronic device 200 may be the foregoing smart home device 101, and/or the electronic device 200 may be the foregoing hub device 102.

The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to control instruction fetching and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 210 may include a plurality of groups of I2C buses. The processor 210 may be separately coupled to the touch sensor 280K, a charger, a flash, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the electronic device 200.

The I2S interface may be configured to perform audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transmit an audio signal to the wireless communication module 260 through the I2S interface, to implement a function of answering a call through a Bluetooth headset.

The PCM interface may also be used for audio communication, to sample, quantize, and encode an analog signal. In some embodiments, the audio module 270 may be coupled to the wireless communication module 260 through a PCM bus interface. In some embodiments, the audio module 270 may alternatively transmit an audio signal to the wireless communication module 260 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is generally configured to connect the processor 210 and the wireless communication module 260. For example, the processor 210 communicates with a Bluetooth module in the wireless communication module 260 through the UART interface, to implement a Bluetooth function. In some embodiments, the audio module 270 may transmit an audio signal to the wireless communication module 260 through the UART interface, to implement a function of playing music through a Bluetooth headset.

The MIPI interface may be configured to connect the processor 210 to a peripheral component like the display 294 or the camera 293. The MIPI interface includes a camera serial interface (camera serial interface, CSI), a display serial interface (display serial interface, DSI), and the like. In some embodiments, the processor 210 communicates with the camera 293 through the CSI interface, to implement a photographing function of the electronic device 200. The processor 210 communicates with the display 294 through the DSI interface, to implement a display function of the electronic device 200.

The GPIO interface may be configured by using software. The GPIO interface may be configured as a control signal or a data signal. In some embodiments, the GPIO interface may be configured to connect the processor 210 to the camera 293, the display 294, the wireless communication module 260, the audio module 270, the sensor module 280, or the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB Type-C interface, or the like. The USB interface 230 may be configured to be connected to a charger to charge the electronic device 200, or may be configured to perform data transmission between the electronic device 200 and a peripheral device, or may be configured to be connected to a headset, to play an audio through the headset. The interface may be further configured to be connected to another electronic device like an AR device.

It may be understood that an interface connection relationship between the modules that is shown in this embodiment of the present invention is merely an example for description, and does not constitute a limitation on the structure of the electronic device 200. In some other embodiments of this application, the electronic device 200 may alternatively use an interface connection mode different from that in the foregoing embodiment, or a combination of a plurality of interface connection modes.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the electronic device 200. The charging management module 240 supplies power to the electronic device by using the power management module 241 while charging the battery 242.

The power management module 241 is configured to be connected to the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like. The power management module 241 may be further configured to monitor parameters such as a battery capacity, a battery cycle count, and a battery health status (an electric leakage or impedance). In some other embodiments, the power management module 241 may alternatively be disposed in the processor 210. In some other embodiments, the power management module 241 and the charging management module 240 may alternatively be disposed in a same component.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive electromagnetic wave signals. Each antenna in the electronic device 200 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 250 may provide a wireless communication solution that includes 2G/3G/4G/5G or the like and that is applied to the electronic device 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some functional modules in the mobile communication module 250 may be disposed in the processor 210. In some embodiments, at least some functional modules in the mobile communication module 250 may be disposed in a same component as the at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 270A, the receiver 270B, or the like), or displays an image or a video by using the display 294. In some embodiments, the modem processor may be an independent component. In some other embodiments, the modem processor may be independent of the processor 210, and is disposed in a same component as the mobile communication module 250 or another functional module.

The wireless communication module 260 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communication module 260 may be one or more components integrating at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the electronic device 200, the antenna 1 and the mobile communication module 250 are coupled, and the antenna 2 and the wireless communication module 260 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 200 implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 200 may include one or N displays 294, where N is a positive integer greater than 1.

The electronic device 200 may implement a photographing function by using the ISP, the camera 293, the video codec, the GPU, the display 294, the application processor, and the like.

The ISP is configured to process data fed back by the camera 293. For example, during photographing, a shutter is pressed, and a light ray is transmitted to a photosensitive element of a camera through a lens. An optical signal is converted into an electrical signal. The photosensitive element of the camera transmits the electrical signal to the ISP for processing, and converts the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 293.

The camera 293 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format like RGB or YUV. In some embodiments, the electronic device 200 may include one or N cameras 293, where N is a positive integer greater than 1.

The digital signal processor is configured to process a digital signal, and may process another digital signal in addition to the digital image signal. For example, when the electronic device 200 selects a frequency, the digital signal processor is configured to perform Fourier transform on frequency energy and the like.

The video codec is configured to compress or decompress a digital video. The electronic device 200 may support one or more video codecs. In this way, the electronic device 200 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. The NPU can implement applications such as intelligent cognition of the electronic device 200, such as image recognition, facial recognition, speech recognition, and text understanding.

The external memory interface 220 may be configured to be connected to an external storage card, for example, a micro SD card, to extend a storage capability of the electronic device 200. The external storage card communicates with the processor 210 through the external memory interface 220, to implement a data storage function. For example, files such as music and videos are stored in the external storage card.

The internal memory 221 may be configured to store computer-executable program code. The executable program code includes instructions. The internal memory 221 may include a program storage area and a data storage area. The program storage area may store an operating system, an application required by at least one function (for example, a voice playing function or an image playing function), and the like. The data storage area may store data (for example, audio data and an address book) and the like created during use of the electronic device 200. In addition, the internal memory 221 may include a high-speed random access memory, and may further include a nonvolatile memory, for example, at least one magnetic disk storage device, a flash storage device, a universal flash storage (universal flash storage, UFS), and the like. The processor 210 runs the instructions stored in the internal memory 221 and/or the instructions stored in the memory disposed in the processor, to perform various function applications of the electronic device 200 and data processing.

The electronic device 200 may implement an audio function by using the audio module 270, the speaker 270A, the receiver 270B, the microphone 270C, the headset jack 270D, the application processor, and the like. For example, a music playing function and a recording function are implemented.

The audio module 270 is configured to convert digital audio information into an analog audio signal for output, and is also configured to convert an analog audio input into a digital audio signal. The audio module 270 may be further configured to: encode and decode an audio signal. In some embodiments, the audio module 270 may be disposed in the processor 210, or some functional modules in the audio module 270 are disposed in the processor 210.

The speaker 270A, also referred to as a "horn", is configured to convert an audio electrical signal into a sound signal. The electronic device 200 may listen to music or answer a hands-free call by using the speaker 270A.

The receiver 270B, also referred to as an "earpiece", is configured to convert the audio electrical signal into the sound signal. When a call is answered or voice information is received by using the electronic device 200, the receiver 270B may be put close to a human ear to listen to a voice.

The microphone 270C, also referred to as a "mike" or a "mic", is configured to convert a sound signal into an electrical signal. When making a call or sending voice information, a user may make a sound near the microphone 270C through the mouth of the user, to input the sound signal to the microphone 270C. At least one microphone 270C may be disposed in the electronic device 200. In some other embodiments, two microphones 270C may be disposed in the electronic device 200, to collect a sound signal and further implement a noise reduction function. In some other embodiments, three, four, or more microphones 270C may alternatively be disposed in the electronic device 200, to collect a sound signal, reduce noise, identify a sound source, implement a directional recording function, and the like.

The headset jack 270D is configured to connect to a wired headset. The headset jack 270D may be the USB interface 230, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed on the display 294. There are many types of pressure sensors 280A, such as a resistive pressure sensor, an inductive pressure sensor, and a capacitive pressure sensor. The capacitive pressure sensor may include at least two parallel plates made of conductive materials. When a force is applied to the pressure sensor 280A, capacitance between electrodes changes. The electronic device 200 determines pressure intensity based on the change in the capacitance. When a touch operation is performed on the display 294, the electronic device 200 detects intensity of the touch operation based on the pressure sensor 280A. The electronic device 200 may also calculate a touch position based on a detection signal of the pressure sensor 280A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 280B may be configured to determine a motion posture of the electronic device 200. In some embodiments, an angular velocity of the electronic device 200 around three axes (namely, axes x, y, and z) may be determined by using the gyroscope sensor 280B. The gyroscope sensor 280B may be configured to implement image stabilization during photographing. For example, when the shutter is pressed, the gyroscope sensor 280B detects an angle at which the electronic device 200 jitters, obtains, through calculation based on the angle, a distance for which a lens module needs to compensate, and allows the lens to cancel the jitter of the electronic device 200 through reverse motion, to implement image stabilization. The gyroscope sensor 280B may also be used in a navigation scenario and a somatic game scenario.

The barometric pressure sensor 280C is configured to measure atmospheric pressure. In some embodiments, the electronic device 200 calculates an altitude by using a value of the atmospheric pressure measured by the barometric pressure sensor 280C, to assist positioning and navigation.

The magnetic sensor 280D includes a Hall effect sensor. The electronic device 200 may detect opening and closing of a flip leather case by using the magnetic sensor 280D. In some embodiments, when the electronic device 200 is a clamshell phone, the electronic device 200 may detect opening and closing of a flip cover based on the magnetic sensor 280D. Further, a feature like automatic unlocking of the flip cover is set based on a detected opening or closing state of the leather case or a detected opening or closing state of the flip cover.

The acceleration sensor 280E may detect accelerations in various directions (usually on three axes) of the electronic device 200, and may detect magnitude and a direction of gravity when the electronic device 200 is static. The electronic device 200 may be further configured to identify a posture of the electronic device, and is used in screen switching between a landscape mode and a portrait mode, a pedometer, or another application.

The distance sensor 280F is configured to measure a distance. The electronic device 200 may measure a distance in an infrared manner or a laser manner. In some embodiments, in a photographing scenario, the electronic device 200 may perform ranging by using the distance sensor 280F to implement fast focusing.

The optical proximity sensor 280G may include, for example, a light-emitting diode (LED) and an optical detector, for example, a photodiode. The light-emitting diode may be an infrared light-emitting diode. The electronic device 200 emits infrared light by using the light-emitting diode. The electronic device 200 detects infrared reflected light from a nearby object by using the photodiode. When detecting sufficient reflected light, the electronic device 200 may determine that there is an object near the electronic device 200. When detecting insufficient reflected light, the electronic device 200 may determine that there is no object near the electronic device 200. The electronic device 200 may detect, by using the optical proximity sensor 280G, that a user holds the electronic device 200 close to an ear to make a call, to automatically turn off a screen for power saving. The optical proximity sensor 280G may also be used for automatic screen unlocking and locking in a smart cover mode or a pocket mode.

The ambient light sensor 280L is configured to sense ambient light brightness. The electronic device 200 may adaptively adjust brightness of the display 294 based on the sensed ambient light brightness. The ambient light sensor 280L may also be configured to automatically adjust white balance during photographing. The ambient light sensor 280L may also cooperate with the optical proximity sensor 280G to detect whether the electronic device 200 is in a pocket to prevent an accidental touch.

The fingerprint sensor 280H is configured to collect a fingerprint. The electronic device 200 may use a feature of the collected fingerprint to implement fingerprint-based unlocking, application lock access, fingerprint-based photographing, fingerprint-based call answering, and the like.

The temperature sensor 280J is configured to detect a temperature. In some embodiments, the electronic device 200 executes a temperature processing policy by using the temperature detected by the temperature sensor 280J. For example, when the temperature reported by the temperature sensor 280J exceeds a threshold, the electronic device 200 lowers performance of a processor located near the temperature sensor 280J, to reduce power consumption and implement thermal protection. In some other embodiments, when the temperature is less than another threshold, the electronic device 200 heats the battery 242, to avoid a case in which the electronic device 200 is shut down abnormally due to a low temperature. In some other embodiments, when the temperature is less than still another threshold, the electronic device 200 boosts an output voltage of the battery 242, to avoid an abnormal shutdown caused by a low temperature.

The touch sensor 280K is also referred to as a "touch device". The touch sensor 280K may be disposed on the display 294. The touch sensor 280K and the display 294 form a touchscreen, and the touchscreen is also referred to as a "touch control screen". The touch sensor 280K is configured to detect a touch operation performed on or near the touch sensor 280K. The touch sensor may transfer the detected touch operation to the application processor to determine a type of the touch event. A visual output related to the touch operation may be provided by using the display 294. In some other embodiments, the touch sensor 280K may alternatively be disposed on a surface of the electronic device 200, and is located on a position different from that of the display 294.

The bone conduction sensor 280M may obtain a vibration signal. In some embodiments, the bone conduction sensor 280M may obtain a vibration signal of a vibration bone of a human vocal-cord part. The bone conduction sensor 280M may also contact a pulse of a human body and receive a blood pressure pulse signal. In some embodiments, the bone conduction sensor 280M may alternatively be disposed in the headset, to combine into a bone conduction headset. The audio module 270 may obtain a voice signal through parsing based on the vibration signal that is of the vibration bone of the vocal-cord part and that is obtained by the bone conduction sensor 280M, to implement a voice function. The application processor may parse heart rate information based on a blood pressure beating signal obtained by the bone conduction sensor 280M, to implement a heart rate detection function.

The button 290 includes a power button, a volume button, and the like. The button 290 may be a mechanical button, or may be a touch button. The electronic device 200 may receive a button input, and generate a button signal input related to a user setting and function control of the electronic device 200.

The motor 291 may generate a vibration prompt. The motor 291 may be configured to provide an incoming call vibration prompt and a touch vibration feedback. For example, touch operations performed on different applications (such as photographing and audio play) may correspond to different vibration feedback effects. The motor 291 may also generate different vibration feedback effects for touch operations performed on different areas of the display 294. Different application scenarios (such as a time reminder, information receiving, an alarm clock, and a game) may also correspond to different vibration feedback effects. A touch vibration feedback effect may be further customized.

The indicator 292 may be an indicator light, and may be configured to indicate a charging status and a battery level change, or may be configured to indicate a message, a missed call, a notification, and the like.

The SIM card interface 295 is configured to be connected to a SIM card. The SIM card may be inserted into the SIM card interface 295 or removed from the SIM card interface 295, to implement contact with or separation from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or different types. The SIM card interface 295 may also be compatible with different types of SIM cards. The SIM card interface 295 may also be compatible with an external storage card. The electronic device 200 interacts with a network by using the SIM card, to implement a call function, a data communication function, and the like. In some embodiments, the electronic device 200 uses an eSIM, namely, an embedded SIM card. The eSIM card may be embedded into the electronic device 200, and cannot be separated from the electronic device 200.

It may be understood that the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The following describes in detail the device control method provided in embodiments of this application based on the device control system shown in FIG. 1 and the electronic device shown in FIG. 2 with reference to a specific application scenario.

### 1. Record family information.

In an initialization phase, the hub device may record the family information in response to an information recording operation of a user.

The family information is used to distinguish the family member from a visitor. The family information may include one or more pieces of information such as an administrator password, facial information of the family member, fingerprint data of the family member, voiceprint data of the family member, and a quantity of family members.

In some embodiments, the family information may be information directly recorded by the hub device. For example, it is assumed that a camera is disposed in the hub device, and the user may directly record the facial information of the family member by using the camera of the hub device.

In some other embodiments, the family information may alternatively be information transmitted by another smart home device in the local area network to the hub device. For example, the user may record fingerprint data of the family member on an intelligent door lock. After the recording is completed, the intelligent door lock may send the fingerprint data to the hub device by using the local area network.

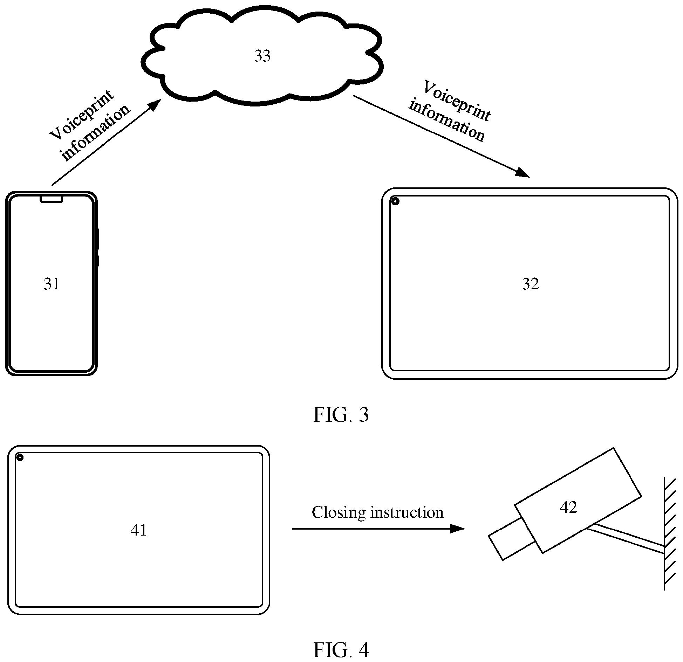

In some other embodiments, the foregoing family information may alternatively be information transmitted by an electronic device outside the local area network to the hub device. For example, as shown in FIG. 3, it is assumed that a mobile phone 31 of a user and a hub device 32 log in to a same Internet of things account. After the user records voiceprint data of a family member by using a microphone on the mobile phone 31, the mobile phone 31 may synchronize the voiceprint data to the hub device 32 under the same Internet of things account by using an Internet of things server 33 in a cloud.

In some other embodiments, the foregoing family information may alternatively be obtained by the hub device through analysis based on a historical record. For example, the hub device may determine the quantity of family members based on a quantity of people staying in every day during a historical time period. A specific scenario is used as an example. It is assumed that the historical time period is a latest week, and the hub device detects that a mode of the quantity of people staying in every day during the time period of the latest week is 3. In this case, the hub device may determine that the quantity of family members is 3.

In some other embodiments, the hub device may alternatively record the family information in another manner. A specific manner of recording the family information by the hub device is not limited in embodiments of this application.

### 2. Identify a user identity.

In the foregoing smart home devices and hub device, some electronic devices have a function of detecting a user identity. In the following description, these electronic devices having a detection function may be defined as detection devices.

The detection devices may include one or more of electronic devices such as a camera, a visual doorbell, an intelligent door lock, a millimeter-wave radar, a mobile sensor, a presence sensor, and a smart speaker.

In a working process, the detection device may collect user characteristics of all users in a home area.

The foregoing user characteristics are used to identify user identities, and the user identities may include a family member and a visitor. The user characteristics may include one or more types of characteristic data such as facial information, fingerprint data, an access control password, sensor data, and voiceprint data.

After collecting the user characteristics, the detection device may locally process the user characteristics to identify a user identity corresponding to the user characteristics. Then, the detection device may send a detection result to the hub device. The detection result may include one or more pieces of information such as the user identity and whether a visitor exists in the home area. After receiving the foregoing detection result, the hub device may determine, based on the foregoing detection result, whether a visitor exists in the home area; and/or
after collecting the user characteristics, the detection device may directly send the user characteristics to the hub device. After receiving the user characteristics, the hub device processes the user characteristics, identifies a user identity corresponding to the user characteristics, and determines, based on the user identity, whether a visitor exists in the home area.

For example, it is assumed that the hub device is a central control screen, and the detection device is a camera. After collecting facial information, the camera may locally identify a user identity corresponding to the facial information, and send the user identity to the central control screen.

Alternatively, after collecting facial information, the camera may directly send the facial information to the central control screen. After receiving the facial information, the central control screen recognizes a user identity corresponding to the facial information.

A manner in which the hub device/detection device identifies a user identity may be set based on user characteristics and an actual scenario.

For example, refer to Table 1. Table 1 schematically lists four manners of identifying a user identity.

**Table 1**

| Identification manner | Comparison data | Operation details |
|---|---|---|
| Facial identification | Facial information of a family member | Match the facial information in user characteristics with the facial information of the family member |
| Voiceprint identification | Voiceprint data of the family member | Match the voiceprint data in the user characteristics with the voiceprint data of the family member |
| Password identification | Administrator password Temporary password | Compare a to-be-verified password input by the user with the administrator password and the temporary password |
| Population identification | Quantity of family members | Compare a quantity of users in the home area with the quantity of family members |

As shown in Table 1, the hub device/detection device may identify the user identity corresponding to the user characteristics in a manner of facial identification, voiceprint identification, password identification, population identification, or the like.

When the hub device/detection device uses the manner of facial identification, the hub device/detection device may match the facial information in the user characteristics with the prerecorded facial information of the family member. If the facial information in the user characteristics successfully matches the facial information of the family member, it indicates that the user identity corresponding to the facial information is a family member. If the facial information in the user characteristics fails to match the facial information of the family member, it indicates that the user identity corresponding to the facial information is a visitor.

When the hub device/detection device uses the manner of voiceprint identification, the hub device/detection device may match the voiceprint data in the user characteristics with the prerecorded voiceprint data of the family member. If the voiceprint data in the user characteristics successfully matches the voiceprint data of the family member, it indicates that the user identity corresponding to the voiceprint data is a family member. If the voiceprint data in the user characteristics fails to match the voiceprint data of the family member, it indicates that the user identity corresponding to the voiceprint data is a visitor.

When the hub device/detection device uses the manner of password identification, the hub device/detection device may compare the to-be-verified password input by the user with the administrator password and the temporary password. The temporary password is a password assigned by an administrator to a visitor. The temporary password may have a limit on a quantity of access times and/or an access time period. For example, in some scenarios, the administrator may set the quantity of access times of the temporary password to 1. In this case, the temporary password can be used only once and automatically becomes invalid after being used once. In some other scenarios, the administrator may set a validity time period of the temporary password to 10 minutes. In this case, a visitor can use the temporary password only within the validity time period, and the temporary password automatically becomes invalid after the validity time period expires. If the to-be-verified password is the administrator password, it indicates that the user may be a family member. If the to-be-verified password is the temporary password, it indicates that the user is a visitor, and a visitor exists in the home area.

When the hub device/detection device uses the manner of population identification, the foregoing user characteristics include a quantity of users in the current home area, and the hub device/detection device may compare the quantity of users with the quantity of family members. If the quantity of users is less than or equal to the quantity of family members, it indicates that there may be no visitor in the home area. If the quantity of users is greater than the quantity of family members, it indicates that a visitor exists in the home area.

In the foregoing example, the four manners of identifying a user identity are schematically listed. In an actual application scenario, the hub device/detection device may use the identification manner described above, and/or may use another identification manner that is not described. A specific manner of identifying a user identity by the hub device/detection device is not limited in embodiments of this application.

In addition, a type of the foregoing visitor may be set based on an actual requirement. For example, in some embodiments, the administrator (a device vendor or a holder of the hub device) may uniformly define a user other than a family member as a visitor. In some other embodiments, the administrator may classify visitors into a trusted visitor and a temporary visitor. The trusted visitor is a visitor like a relative or an acquaintance who has a relatively close relationship with the family member. The temporary visitor is a visitor like an unfamiliar friend, a door-to-door maintenance personnel, or a property management personnel who drops by. In some other embodiments, the administrator may alternatively classify visitors into a first-level visitor, a second-level visitor, and a third-level visitor, and set a corresponding permission for each level of visitor. In some other embodiments, the administrator may alternatively classify visitor types in another manner. A specific manner in which the administrator classifies types of visitors is not limited in embodiments of this application.

It should be noted that, because there are many representation forms of the visitor types, in the following described content, content related to the visitor types is described by using a trusted visitor and a temporary visitor as examples. It may be understood that, unless otherwise specified, the following described content is also applicable to a visitor type classified in another manner.

### 3. Enter a visitor mode.

When the hub device determines that a visitor exists in the home area, the hub device may enter the visitor mode, and send a visitor mode notification to each smart home device in the local area network.

When the smart home device receives the visitor mode notification, the smart home device may enter the visitor mode.

In the visitor mode, the electronic device may protect privacy information of the family member and/or limit a sensitive operation. The sensitive operation is an operation related to personal and property security of the family member, for example, a control operation on a security protection device or a change operation on family information.

Specifically, the electronic device may protect the privacy information and limit the sensitive operation by using one or more of protection policies such as anonymizing the privacy information, hiding the privacy information, hiding an access portal of the privacy information, shielding the sensitive operation, hiding the access portal of the sensitive operation, and performing identity verification when the sensitive operation is detected.

For example, refer to Table 2. Table 2 lists examples of protection policies for four protected objects.

**Table 2**

| Protected object | Object instance | Family member mode | Visitor mode |
|---|---|---|---|
| Communication content | Voice message | Play the voice message normally | Anonymize the message and prompt a user to view the message on a personal device |
| | Text message | | |
| | | Display the text message normally | |
| Hobbies | Music play record, favorite music/singer, video play record, and favorite video type/actor | Play and recommend an audio and a video based on the play records and preferences | Display no play records, and play and recommend no audio and video based on the play records and preferences |
| Sensitive operations | Operation on a security protection device | Display an access portal of the sensitive operation normally | Hide an access portal of the sensitive operation |
| | Family information change | Require no identity verification to perform the sensitive operation | Require identity verification to perform the sensitive operation |
| Privacy information | Family album | Display normally | Hide an access portal of the privacy information |
| | Express delivery address | Editable | |
| | | | Require identity verification to edit the privacy information |

As shown in Table 2, for communication content such as the voice message and the text message, the electronic device may normally display the communication content in the family member mode. In the visitor mode, the electronic device may anonymize the communication content, and prompt the user to view the communication content on the personal device. The personal device may be an electronic device like a mobile phone or an intelligent wearable device for non-shared use.

For example, when the smart speaker is in the visitor mode, if the smart speaker receives a voice message, the smart speaker may play "You have a new voice message. Please view it on your phone" to prompt the family member to listen to the voice message through the phone, to prevent the smart speaker from directly playing the voice message in the presence of a visitor, and prevent the family member from being embarrassed.

For the hobbies such as music and video play records, favorite music/singers, and favorite video types/actors, in the family member mode, the electronic device may play and recommend an audio and a video to a family member based on the foregoing play records and the personal preferences. In the visitor mode, the electronic device may hide the play records, and does not play or recommend an audio or a video based on the play records and the personal preferences.

For example, it is assumed that a family member likes to watch animations on a smart large screen. In the family member mode, the smart large screen may recommend animations to the family member based on play records and personal preferences of the family member. In the visitor mode, the smart large screen may hide the play records and randomly recommend videos to a visitor, to prevent the visitor from knowing that the family member likes to watch animations.

For sensitive operations such as operating a security protection device and changing family information, in the family member mode, the electronic device may normally display an access portal of the sensitive operation, and in some scenarios, the family member may directly perform the sensitive operation without identity verification. In the visitor mode, the electronic device may hide the access portal of the sensitive operation, to prevent a visitor from performing the sensitive operation. Alternatively, the electronic device may require the user to perform identity verification when detecting the sensitive operation. The identity verification may include one or more of manners such as facial verification, fingerprint verification, voiceprint verification, and password verification. If the identity verification succeeds, it indicates that the sensitive operation is performed by the family member, and the electronic device may perform the sensitive operation. Alternatively, if the identity verification fails, it indicates that the sensitive operation is not performed by the family member, and the electronic device may reject to perform the sensitive operation.

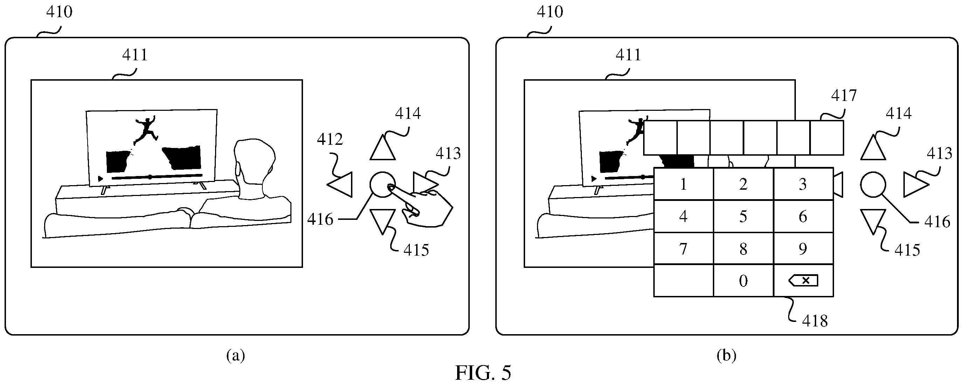

For example, refer to FIG. 4 and FIG. 5. It is assumed that the hub device is a central control screen 41, and the security protection device includes a camera 42.

As shown in (a) in FIG. 5, a camera control interface 410 of the central control screen 41 includes a monitoring display interface 411, a pan-tilt-zoom left-turn control 412, a pan-tilt-zoom right-turn control 413, a pan-tilt-zoom up control 414, a pan-tilt-zoom down control 415, and a switch control 416. In the family member mode, when the camera 42 is in an on state, and the central control screen 41 detects a tap operation of a user on the switch control 416, the central control screen 41 may directly send a turn-off instruction to the camera 42.

As shown in a scenario (b) in FIG. 5, in the visitor mode, when the camera 42 is in the on state, and the central control screen 41 detects a tap operation of the user on the switch control 416, the central control screen 41 may pop up an identity verification box 417 and a virtual keyboard 418. Then, the central control screen 41 may obtain a to-be-verified password in response to an operation of the user on the virtual keyboard 418, and compare the to-be-verified password with an administrator password. If the to-be-verified password is consistent with the administrator password, the identity verification succeeds, and the central control screen 41 may send a turn-off instruction to the camera 42. Alternatively, if the to-be-verified password is inconsistent with the administrator password, the identity verification fails, and the central control screen 41 may not respond to the tap operation of the user on the switch control 416.

For privacy information such as a family album, an express delivery address, and a phone number, in the family member mode, the electronic device may normally display an access portal of the privacy information, and the user may edit the privacy information. In the visitor mode, the electronic device may display the access portal of the privacy information. However, when the electronic device detects an editing operation of the user on the privacy information, the electronic device may require the user to perform identity verification. If the identity verification succeeds, the electronic device may allow the user to edit the privacy information; or if the identity verification fails, the electronic device may reject the user to edit the privacy information. Alternatively, the electronic device may directly hide the access portal of the privacy information, to prevent a visitor from viewing the privacy information of the family member.

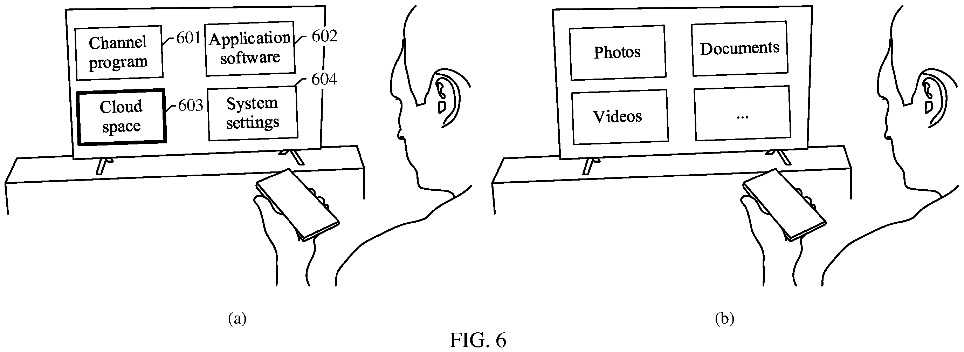

For example, as shown in a scenario (a) in FIG. 6, it is assumed that a home page of a smart large screen includes a channel program control 601, an application software control 602, a cloud space control 603, and a system setting control 604.

In the family member mode, the smart large screen may normally display the four controls, namely, the channel program control 601, the application software control 602, the cloud space control 603, and the system setting control 604. When the smart large screen detects a selection operation of a user on the cloud space control 603, the smart large screen may enter an access interface of cloud space. As shown in a scenario (b) in FIG. 6, on the access interface of the cloud space, the smart large screen may display content like photos, documents, or videos in the cloud space to the user.

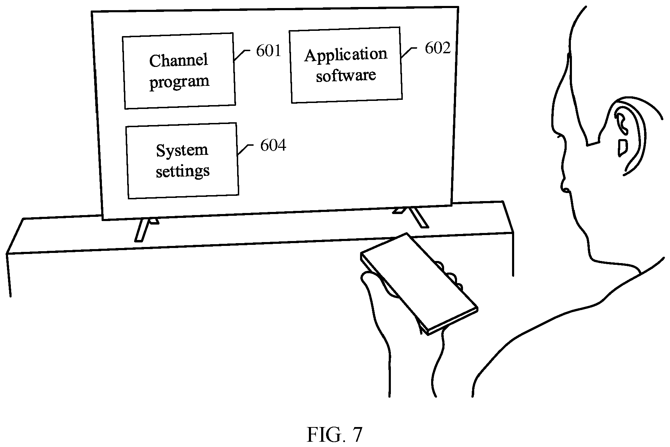

As shown in FIG. 7, in the visitor mode, the cloud space control 603 may be directly hidden on the home page of the smart large screen. In this case, the user cannot access the access interface of the cloud space, and cannot view the content in the cloud space.

The foregoing schematically lists the protection policies of the electronic device for the foregoing four protected objects. In an actual application scenario, the privacy information and the sensitive operations may include the foregoing four protected objects, and/or may include another protected object that is not shown. In addition, when protecting the privacy information and limiting the sensitive operation, the electronic device may use the protection policies shown above, and/or may use another protection policy that is not shown. An object protected by the electronic device in the visitor mode and a protection policy used by the electronic device are not limited in embodiments of this application.

In addition, when there are different visitor types, the different visitor types may correspond to different visitor modes. Different protection policies may be used in different visitor modes. In this case, the hub device may control, based on an identified visitor type, the hub device and the smart home device to enter a corresponding visitor mode.

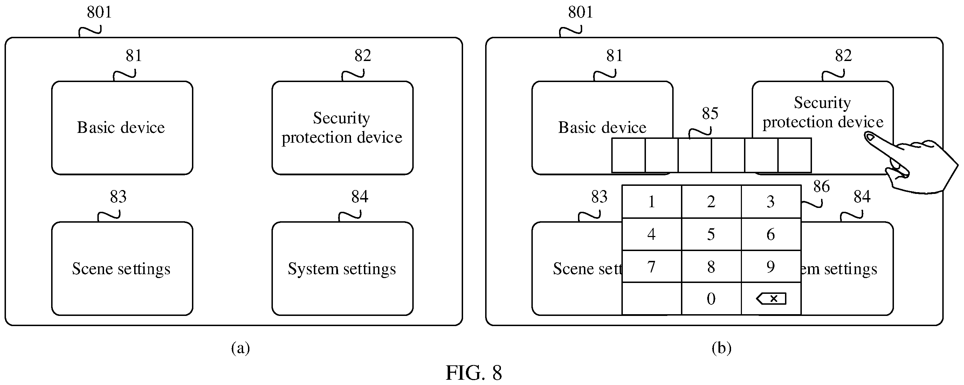

For example, as shown in FIG. 8, it is assumed that the hub device is a central control screen, and visitor types include a trusted visitor and a temporary visitor.

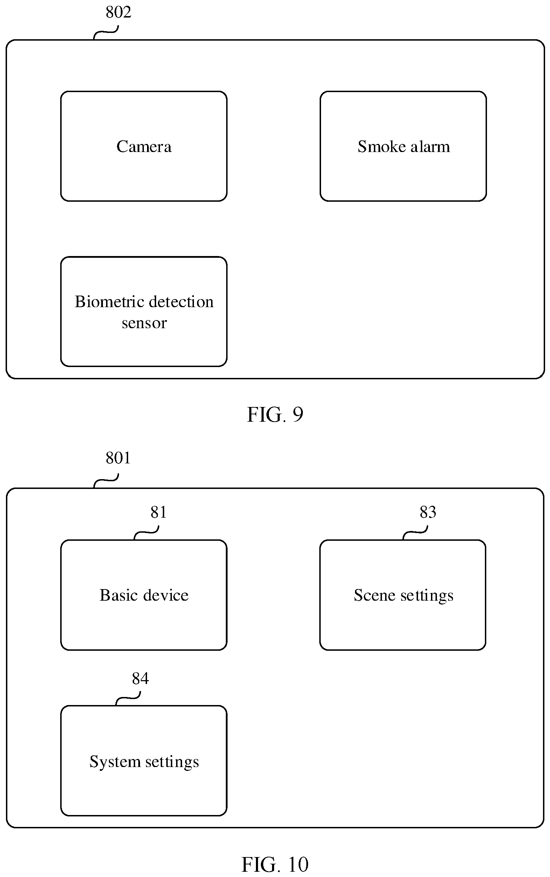

When the central control screen determines that a trusted visitor exists in the home area and no temporary visitor exists in the home area, the central control screen may enter a trusted visitor mode. As shown in a scenario (a) in FIG. 8, in the trusted visitor mode, a main interface 801 of the central control screen may include a basic device control 81, a security protection device control 82, a scene setting control 83, and a system setting control 84. As shown in a scenario (b) in FIG. 8, when the central control screen detects a tap operation of the user on the security protection device control 82, the central control screen may pop up an identity verification box 85 and a virtual keyboard 86. Then, the central control screen may obtain a to-be-verified password in response to an operation of the user on the virtual keyboard 86, and compare the to-be-verified password with an administrator password. As shown in FIG. 9, if the to-be-verified password is consistent with the administrator password, the identity verification succeeds, and the central control screen may enter a security protection device control interface 802. In this case, the user may control security protection devices such as a camera, a smoke alarm, and a biometric detection sensor that are displayed on the security protection device control interface. Alternatively, if the to-be-verified password is inconsistent with the administrator password, the identity verification fails, and the central control screen may not respond to the tap operation of the user on the security protection device control.

As shown in FIG. 10, when the central control screen determines that a temporary visitor exists in the home area, the central control screen may enter a temporary visitor mode, and the central control screen may hide the security protection device control 82 on the main interface 801. In this case, the main interface 801 of the central control screen may include the basic device control 81, the scene setting control 83, and the system setting control 84, but does not include the security protection device control 82. The user cannot find the security protection device control 82, and cannot enter the security protection device control interface 802.

In the foregoing described examples, different visitor types correspond to different visitor modes, and the hub device may determine a corresponding visitor mode based on an identified visitor type. In this manner, the hub device can manage different types of visitors more flexibly, and provide different permissions for different types of visitors.

In addition, when the hub device detects that visitors of different visitor types exist in the home area, the hub device may determine, from the foregoing visitor types corresponding to the visitors, a target visitor type with a lowest permission, and enter a visitor mode corresponding to the target visitor type. For example, it is assumed that a permission of a trusted visitor is higher than a permission of a temporary visitor. When the hub device identifies that both a trusted visitor and a temporary visitor exist in the home area, the hub device may enter the temporary visitor mode instead of the trusted visitor mode. In this manner, the hub device can prevent a low-permission visitor from using a permission of another visitor to view privacy information of a family member and/or performing a sensitive operation without authorization, thereby protecting privacy security and personal and property security of the family member.

### 4. Authorize a personal device.

In an actual application scenario, a visitor may intend to use a personal device of the visitor to control a hub device/smart home device in the home area.

In this case, an electronic device (for example, the hub device and/or the smart home device) having a display may display an authorization code on the display. The authorization code may be displayed in any one or more of forms such as a bar code, a QR code, and a radiation code. After the visitor scans the authorization code by using a visitor device (namely, the personal device of the visitor), the visitor device may send an authorization request to the target device. The target device is a personal device that logs in to a same Internet of things account as the central device, or may be understood as a personal device of a family member.

When the target device agrees to the authorization request, the visitor device can obtain a visitor permission.

When the target device rejects the authorization request, the visitor device cannot obtain a visitor permission.

A type of the visitor permission may be related to a visitor mode that the hub device/smart home device is currently in.

For example, when the hub device and the smart home device in the home area are in the trusted visitor mode, the visitor device may obtain a trusted visitor permission after being authorized by the target device. When the hub device and the smart home device in the home area are in the temporary visitor mode, the visitor device may obtain a temporary visitor permission after being authorized by the target device.

Alternatively, a type of the visitor permission may be set by the target device.

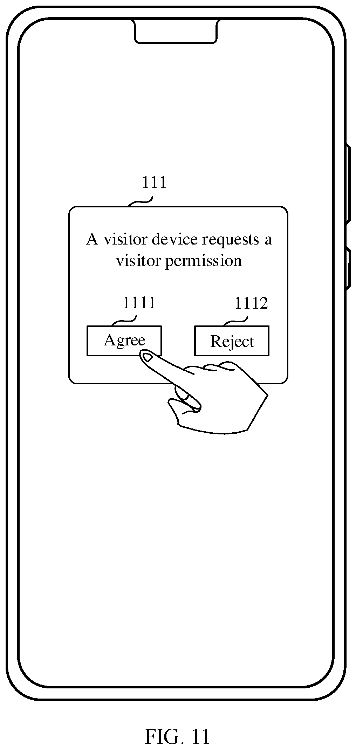

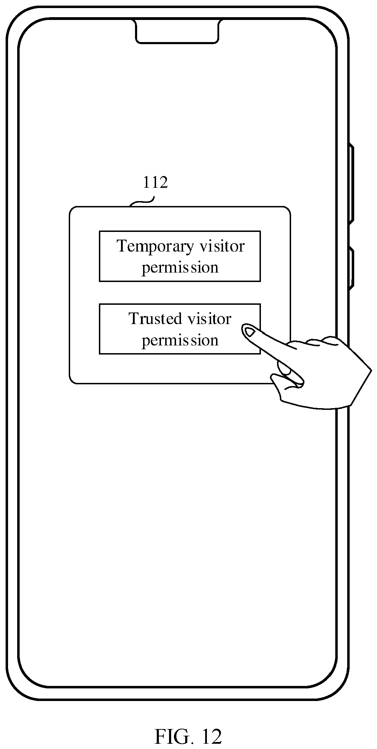

For example, as shown in FIG. 11, it is assumed that the target device is a mobile phone. When the mobile phone receives an authorization request, the mobile phone may pop up an authorization consultation box 111. The authorization consultation box includes a text "A visitor device requests a visitor permission", and provides an "Agree" control 1111 and a "Reject" control 1112. When the mobile phone detects a tap operation of the user on the "Agree" control 1111, as shown in FIG. 12, the mobile phone may pop up a permission selection box 112. The permission selection box 112 includes two options: "Trusted visitor permission" and "Temporary visitor permission". When the mobile phone detects a tap operation of the user on the "Trusted visitor permission", the mobile phone may send a trusted visitor authorization notification to the visitor device. The trusted visitor authorization notification is used to grant a trusted visitor permission to the visitor device.

In addition, when the visitor device is granted different visitor permissions, the visitor device may have different operation ranges.

For example, refer to Table 3. Table 3 schematically lists operation ranges corresponding to different permissions.

**Table 3**

| | Security protection control operation | Privacy view operation | Family management operation | Basic device operation |
|---|---|---|---|---|
| Family member permission | Complete controllability | Complete controllability | Complete controllability | Complete controllability |
| Trusted visitor permission | Authorized controllability | Authorized controllability | Complete uncontrollability | Complete controllability |
| Temporary visitor permission | Complete uncontrollability | Complete uncontrollability | Complete uncontrollability | Authorized controllability |

The security protection control operation may include a control operation on the security protection device. The privacy view operation may include a view operation on privacy information of a family member. The family management operation may include operations such as changing family information, sharing a permission, and changing a permission. The basic device operation may include a low-risk control operation, other than the security protection control operation, the privacy view operation, and the family management operation, that is performed on the smart home device, for example, turning on a smart large screen, turning on an air conditioner, controlling a vacuum cleaner robot, and turning on/turning off a smart lamp.

Complete controllability means that the target device/visitor device may directly perform such operations. Authorized controllability means that the visitor device needs to request an operation permission from the target device before performing such operations, and when being granted the operation permission by the target device, the visitor device may perform such operations. Complete uncontrollability means that the visitor device is prohibited from performing such operations.

For the target device, if the target device has the family member permission, as shown in Table 3, the target device may directly perform the security protection control operation, the privacy view operation, the family management operation, and the basic device operation.

For the visitor device, if the visitor device has the trusted visitor permission, as shown in Table 3, the visitor device may directly perform the basic device operation. In addition, when being granted the operation permission by the target device, the visitor device may further perform the security protection control operation and the privacy view operation.

For the visitor device, if the visitor device has the temporary visitor permission, as shown in Table 3, the visitor device may perform the basic device operation when being granted the operation permission by the target device, and is prohibited from performing the security protection control operation and the privacy view operation.

In addition, to prevent the visitor device from stealing the family member permission, regardless of a specific visitor permission that the visitor device has, the visitor device is prohibited from performing the family management operation.

In addition to differences in operation ranges, different visitor permissions may be set with different use limitations.

For example, in some embodiments, there is no use time limitation on the trusted visitor permission, but the temporary visitor permission can only be used within a limited use time period. In other embodiments, there is no limitation of a quantity of use times on the trusted visitor permission, but the temporary visitor permission can only be used for a limited quantity of use times. In some other embodiments, there is no network limitation on the trusted visitor permission. A visitor device having a trusted visitor permission may use the trusted visitor permission by using a family local area network or a wide area network, to control the smart home device. However, the temporary visitor permission can only be used when the visitor device accesses a corresponding family local area network. When a visitor device having a temporary visitor permission leaves the family local area network, the visitor device cannot use the temporary visitor permission, and cannot control the foregoing smart home device.

In addition, it should be noted that the foregoing visitor types and visitor permissions may be changed.

In some embodiments, a management device may change a visitor type and a visitor permission of a visitor in response to a change operation of a family member. The management device is an electronic device that can perform the family management operation, for example, a hub device or a personal device of a family member.

In some other embodiments, the visitor type and the visitor permission may alternatively automatically change according to a preset change rule. The foregoing change rule may be related to factors such as a quantity of visits and staying duration of a visitor. For example, as the quantity of visits of the visitor increases, a visitor type of the visitor may be automatically changed from a temporary visitor to a trusted visitor. Specific content of the change rule is not limited in embodiments of this application.

### 5. Assist in anonymization and control.

In the foregoing smart home devices, some smart home devices may not support the visitor mode. Therefore, such devices cannot enter the visitor mode in response to the visitor mode notification of the hub device. In embodiments of this application, a smart home device that does not support the visitor mode is referred to as a "silent device". Because a silent device cannot enter the visitor mode, the silent device may disclose privacy information of a family member, and/or perform a sensitive operation under control of a visitor. To reduce the possibility of the foregoing accident, the hub device may assist the silent device in protecting privacy information and limiting a sensitive operation.

In some embodiments, if the hub device detects privacy information sent to the silent device and is currently in the visitor mode, the hub device may anonymize the privacy information to obtain anonymous information, and send the anonymous information to the silent device.

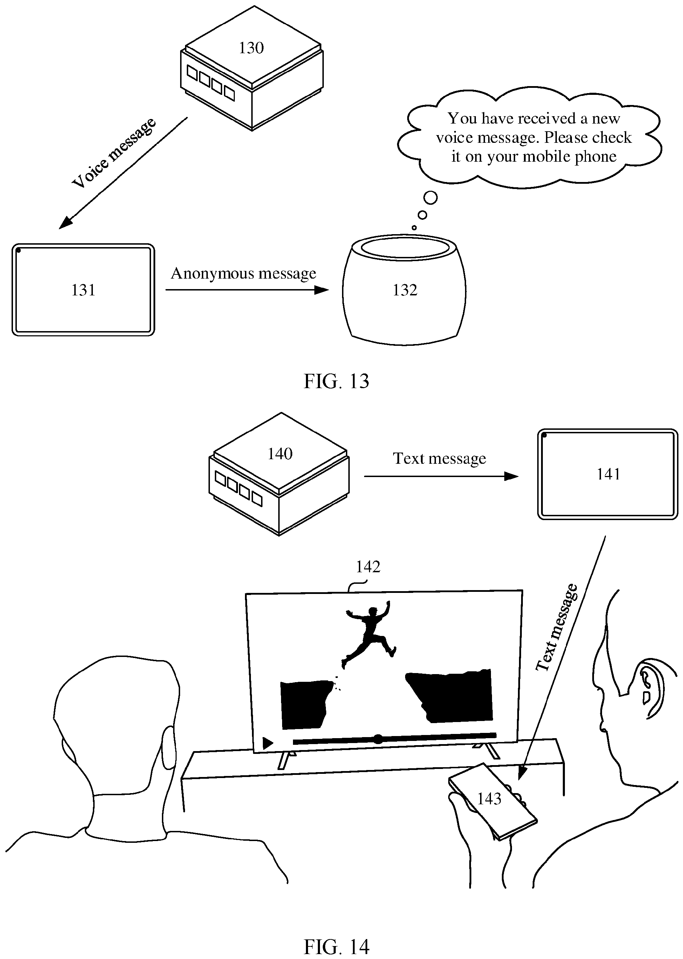

For example, as shown in FIG. 13, it is assumed that the hub device is a central control screen 131, and the silent device is a smart speaker 132. At a moment, an Internet of things server 130 sends a voice message to the central control screen 131, to indicate the central control screen 131 to forward the voice message to the smart speaker 132. In this case, the central control screen 131 detects that the smart speaker 132 is a silent device and is currently in the visitor mode. Therefore, the central control screen 131 may anonymize the voice message to obtain an anonymous message. Then, the central control screen 131 may forward the anonymous message to the smart speaker 132. After receiving the anonymous message, the smart speaker 132 may directly play the anonymous message: "You have received a new voice message. Please check it on your mobile phone." In this way, disclosure of privacy information of a family member in the visitor mode is avoided.

In some other embodiments, when the hub device detects privacy information sent to the silent device, the hub device may directly intercept the privacy information.

For example, as shown in FIG. 14, it is assumed that the hub device is a central control screen 141, the silent device is a smart large screen 142, and the personal device of the family member is a mobile phone 143. At a moment, the family member and a friend watch a program played on the smart large screen 142 together at home. In this case, an Internet of things server 140 sends a text message to the central control screen 141, to indicate the central control screen 141 to forward the text message to the smart large screen 142. After receiving the text message, the central control screen 141 detects that the smart large screen 142 is a silent device. Therefore, the central control screen 141 may directly intercept the text message, and forward the text message to the mobile phone 143. In this case, the smart large screen 142 cannot receive or display the text message, but the family member can view the text message on the mobile phone 143.

In some other embodiments, when the hub device detects a device control instruction sent by the silent device, the hub device may directly intercept the device control instruction and prohibit the device control instruction from being performed. The device control instruction is used to control the hub device and/or the smart home device.

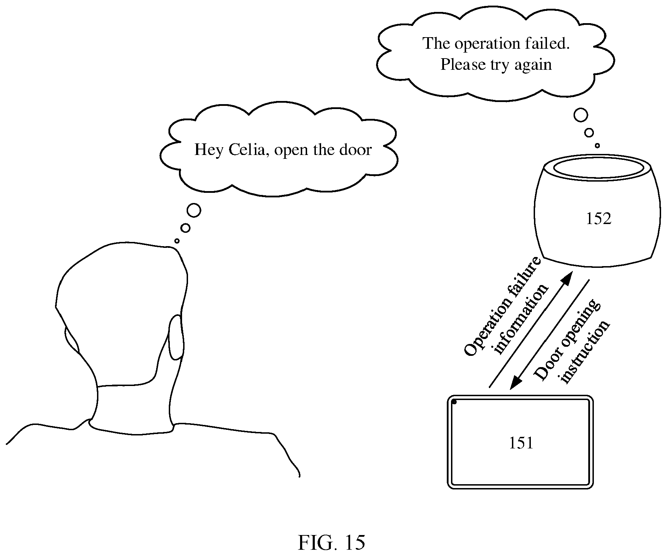

For example, as shown in FIG. 15, it is assumed that the hub device is a central control screen 151, and the silent device is a smart speaker 152. At a moment, a visitor says to the smart speaker 152: "Hey Celia, open the door". In this case, in response to the instruction of the visitor, the smart speaker 152 sends a door opening instruction to the central control screen 151, to indicate the central control screen 151 to forward the door opening instruction to an intelligent door lock. When the central control screen 151 receives the door opening instruction, the central control screen 151 detects that the smart speaker 152 is a silent device. Therefore, the central control screen 151 directly intercepts the door opening instruction, does not forward the door opening instruction to the intelligent door lock, and returns operation failure information to the smart speaker 152. When the smart speaker 152 receives the operation failure information, the smart speaker 152 plays a voice announcement: "The operation failed. Please try again."

In some other embodiments, the hub device may alternatively assist the silent device in protecting privacy information and limiting a sensitive operation in another manner. A specific assisting manner of the hub device is not limited in embodiments of this application.

In the foregoing manner, the hub device may assist the silent device in protecting privacy information and limiting a sensitive operation, to reduce a possibility that the silent device discloses the privacy information and performs the sensitive operation without authorization, thereby effectively protecting privacy security and personal and property security of the family member.

### 6. Exit the visitor mode

In addition to controlling the hub device and the smart home device to automatically enter the visitor mode, the hub device may further control the hub device and the smart home device to exit the visitor mode. A condition for the hub device to control the hub device and the smart home device to exit the visitor mode may be set based on an actual scenario.

In some possible implementations, the hub device may control, in response to an operation of the user, the hub device and the smart home device to exit the visitor mode after identity verification on the user succeeds. For example, when the hub device detects an exit operation of the user, the hub device may perform identity verification on the user. If the identity verification succeeds (for example, it is confirmed that the user performing the exit operation this time is the family member), the hub device may exit the visitor mode, and send a visitor mode exit notification to the smart home device. When the smart home device receives the visitor mode exit notification, the smart home device may exit the visitor mode. If the identity verification fails (for example, it is confirmed that the user performing the exit operation this time is a visitor), the hub device does not respond to the exit operation.

In some embodiments, when it is determined that no visitor exists in the home area, the hub device may control, in response to the operation of the user, the hub device and the smart home device to directly exit the visitor mode and enter the family member mode.

For example, when maintenance personnel are in the home area, the hub device and the smart home device are in the visitor mode. After the maintenance personnel leave, the user performs an exit operation on the hub device. In this case, the hub device may determine, by using each detection device, whether a visitor exists in the home area.

When the hub device determines that no visitor exists in the home area, the hub device may control, in response to the exit operation, the hub device and another smart home device to directly exit the visitor mode and enter the family member mode.

In some other embodiments, when a visitor still exists in the home area, the hub device may control, in response to the operation of the user, the hub device and the smart home device to directly exit the visitor mode and enter the family member mode.

For example, it is assumed that the hub device sets an operation permission of the user to a highest priority.

At a moment, the hub device detects an exit operation of the user, and the hub device determines that a visitor still exists in the home area.

In this case, because an operation permission of the hub device is lower than the operation permission of the user, even if a visitor exists in the home area, the hub device may control, in response to the operation of the user, the hub device and the smart home device to directly exit the visitor mode and enter the family member mode.

In some other embodiments, when a visitor still exists in the home area, the hub device may control, in response to the operation of the user, the hub device and the smart home device to exit the visitor mode in which the hub device and the smart home device are currently located, and enter a visitor mode with a higher permission.

For example, as described above, it is assumed that the visitor types are classified into the trusted visitor and the temporary visitor, where the trusted visitor corresponds to the trusted visitor mode, the temporary visitor corresponds to the temporary visitor mode, and the hub device is currently in the temporary visitor mode. At a moment, the hub device detects the exit operation of the user, and the hub device determines that two visitors still stay in the home area, where both the two visitors are temporary visitors. In this case, the hub device may change a visitor type of each of the two visitors to a trusted visitor, record user characteristics of the two visitors in a trusted visitor feature library, exit the temporary visitor mode, and enter the trusted visitor mode.

It should be noted that, when the hub device detects the exit operation and the hub device determines that a visitor exists in the home area, if the hub device directly enters the family member mode, the visitor may steal a permission of the family member, and view privacy information of the family member and/or perform a sensitive operation without authorization.

Therefore, in this embodiment, when the hub device detects the exit operation, if the hub device determines that a visitor exists in the home area, the hub device may control the hub device and the smart home device to exit the visitor mode in which the hub device and the smart home device are currently located and enter a visitor mode with a higher permission.

In this manner, the hub device can meet a requirement of a user for improving a permission of a visitor, and can further prevent the visitor from using the permission of the family member without approval in the family member mode, thereby protecting privacy security and personal and property security of the family member.

In some other possible implementations, when the hub device detects that each user in the home area is a family member, the hub device may control the hub device and the smart home device to exit the visitor mode.

For example, it is assumed that, at a moment, the hub device detects that two visitors leave the home area, only two users remain in the home area, and the remaining two users are both family members. In this case, the hub device may control the hub device and the smart home device to automatically exit the visitor mode and enter the family member mode.

In some other possible implementations, when the hub device detects that all users leave the home area, the hub device may control the hub device and the smart home device to exit the visitor mode.

For example, it is assumed that the hub device detects, at a moment by using a presence sensor, that no user exists in the home area. In this case, the hub device may control the hub device and the smart home device to automatically exit the visitor mode and enter the family member mode.

In some other possible implementations, when the hub device detects that all users leave the home area, the hub device may camp on the visitor mode. Thereafter, when the hub device detects that a user enters the home area and the user is a family member, the hub device may control the hub device and the smart home device to exit the visitor mode and enter the family member mode.

For example, it is assumed that the hub device detects, at a moment by using a presence sensor, that no user exists in the home area. In this case, the hub device may camp on the visitor mode. After a period of time, if the hub device detects, by using the camera, that a user enters the home area, and an identification result of facial information of the user is a family member, the hub device may control the hub device and the smart home device to automatically exit the visitor mode and enter the family member mode.

According to the foregoing method, the hub device may control the hub device and each smart home device to exit the visitor mode, so that the user does not need to perform an operation on each electronic device one by one. This reduces operation content of the user, and improves user experience.

For ease of understanding, the following describes the foregoing device control method in detail with reference to a specific application scenario.

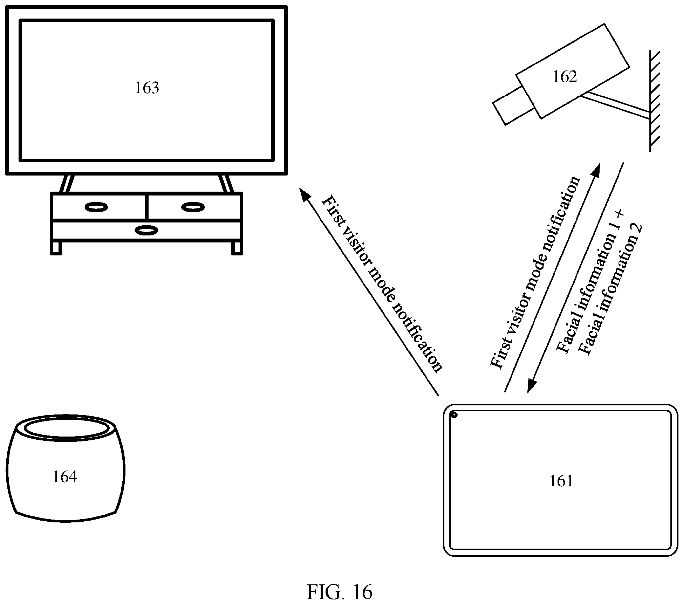

Refer to FIG. 16. It is assumed that a central control screen 161, a camera 162, a smart large screen 163, and a smart speaker 164 are disposed at home of a user A. The central control screen 161 is a central device; the camera 162, the smart large screen 163, and the smart speaker 164 are smart home devices; and the smart speaker 164 is a silent device.

At a first moment, the user A brings a user B who is a visitor to the home. In this case, the camera 162 photographs facial information 1 of the user A and facial information 2 of the user B, and sends the facial information 1 and the facial information 2 to the central control screen 161.

The central control screen 161 pre-stores facial information of a family member and facial information of a trusted visitor. Therefore, the central control screen 161 may compare the facial information 1 and the facial information 2 with the facial information of the family member and the facial information of the trusted visitor, to determine user identities of the user A and the user B.

After determining that the user A is a family member and the user B is a temporary visitor, the central control screen 161 automatically enters a temporary visitor mode, and sends a first visitor mode notification to the camera 162 and the smart large screen 163. The camera 162 and the smart large screen 163 automatically enter the temporary visitor mode in response to the first visitor mode notification.

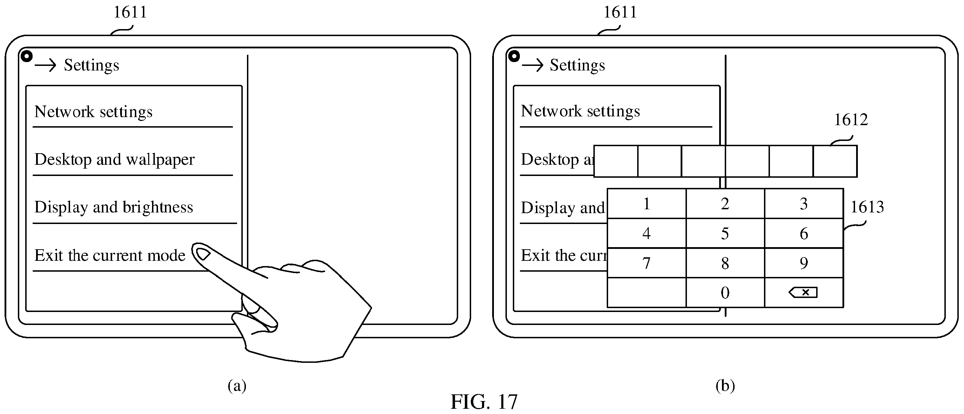

As shown in a scenario (a) in FIG. 17, it is assumed that the user B needs to stay at the home of the user A for several days. Therefore, to enable the user B to control each smart home device conveniently, the user A may perform an operation on the central control screen 161, to enter a setting interface 1611 of the central control screen 161. There are four options on the setting interface 1611, namely, "Network settings", "Desktop and wallpaper", "Display and brightness", and "Exit the current mode". The user may tap the option of "Exit the current mode" on the setting interface 1611.

In this case, as shown in a scenario (b) in FIG. 17, the central control screen 161 may pop up an identity verification box 1612 and a virtual keyboard 1613 on the setting interface 1611 in response to an operation of the user A. Then, the central control screen 161 may obtain a to-be-verified password in response to an operation of the user A on the virtual keyboard 1613, and compare the to-be-verified password with an administrator password.

Because the to-be-verified password input by the user A is consistent with the administrator password, the central control screen 161 exits the temporary visitor mode, enters the trusted visitor mode, sends a mode change notification to the camera 162 and the smart large screen 163, and records the facial information of the user B in a trusted visitor feature library.

After receiving the mode change notification, the camera 162 and the smart large screen 163 exit the temporary visitor mode and enter the trusted visitor mode.

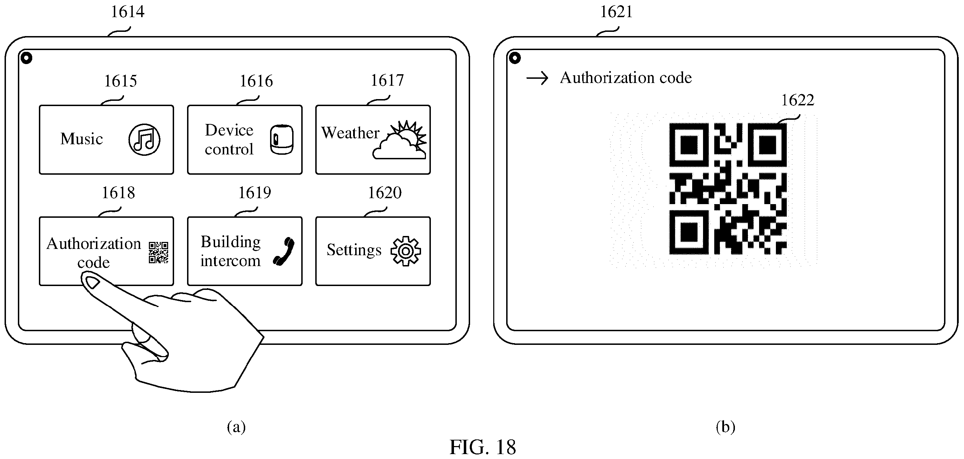

In addition, as shown in a scenario (a) in FIG. 18, the user A may further perform an operation on the central control screen 161, to enter a main interface 1614 of the central control screen. The main interface 1614 includes a "Music" control 1615, a "Device control" control 1616, a "Weather" control 1617, an "Authorization code" control 1618, a "Building intercom" control 1619, and a "Settings" control 1620.

The user A may tap the "Authorization code" control 1618 on the main interface 1614.

In this case, as shown in a scenario (b) in FIG. 18, the central control screen 161 enters an authorization code interface 1621 in response to an operation of the user. The authorization code interface 1621 includes an authorization code 1622.

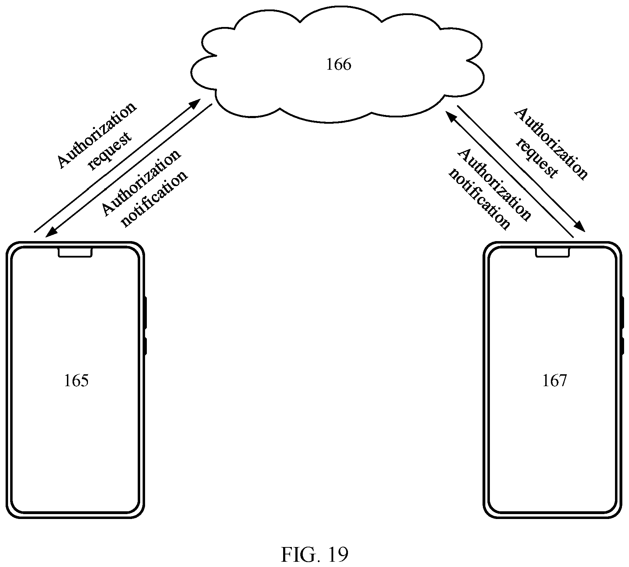

As shown in FIG. 19, after the user B scans the authorization code by using a mobile phone 165 (a personal device of the user B), the mobile phone 165 may send an authorization request to an Internet of things server 166. After receiving the authorization request, the Internet of things server 166 forwards the authorization request to a mobile phone 167 (a personal device of the user A) of the user A.

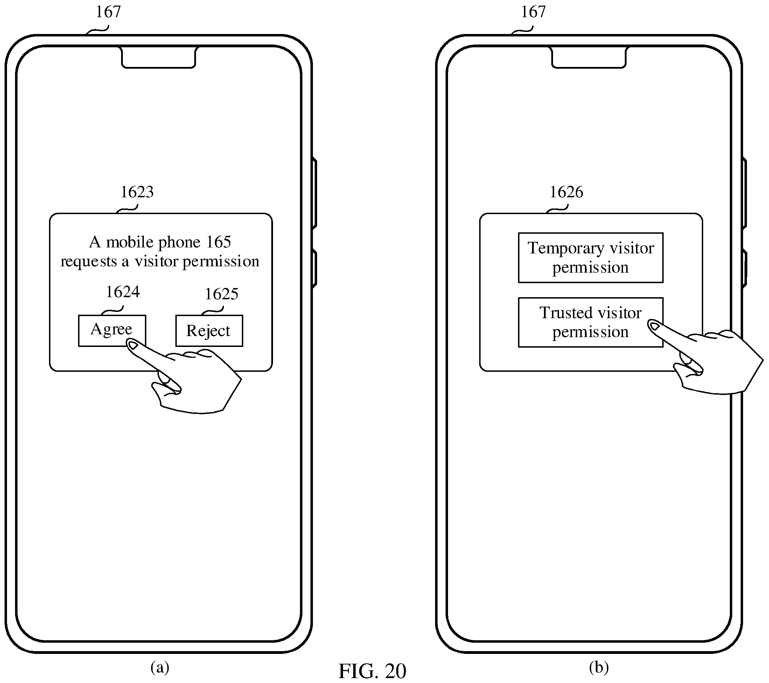

As shown in a scenario (a) in FIG. 20, after receiving the authorization request, the mobile phone 167 pops up an authorization consultation box 1623 on a display of the mobile phone 167. The authorization consultation box 1623 includes a text "The mobile phone 165 requests a visitor permission", and provides an "Agree" control 1624 and a "Reject" control 1625. When the user Ataps the "Agree" control 1624 on the display of the mobile phone 167, as shown in a scenario (b) in FIG. 20, the mobile phone 167 may pop up a permission selection box 1626. The permission selection box 1626 includes two options: "Trusted visitor permission" and "Temporary visitor permission".

When the user A taps the "Trusted visitor permission" on the display of the mobile phone 167, the mobile phone 167 sends a trusted visitor authorization notification to the Internet of things server 166. After receiving the trusted visitor authorization notification, the Internet of things server 166 forwards the trusted visitor authorization notification to the mobile phone 165, and records a device identifier of the mobile phone 165 in a device list with the trusted visitor permission.

After receiving the trusted visitor authorization notification, the mobile phone 165 obtains the trusted visitor permission. In this case, the user B may directly perform a basic device operation on the mobile phone 165. In addition, after being authorized by the mobile phone 167, the user B may further perform a security protection control operation and a privacy view operation on the mobile phone 165.

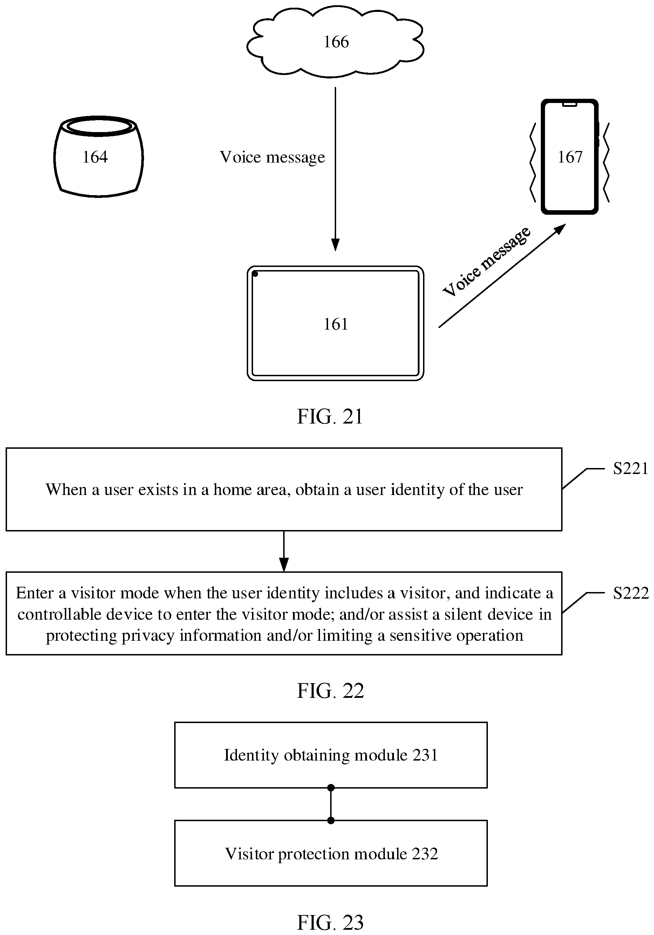

As shown in FIG. 21, at a second moment, the Internet of things server 166 sends a voice message to the central control screen 161, to indicate the central control screen 161 to forward the voice message to the smart speaker 164. The central control screen 161 is in the trusted visitor mode, and the smart speaker 164 is a silent device. Therefore, the central control screen 161 intercepts the voice message, and forwards the voice message to the mobile phone 167. After receiving the voice message, the mobile phone 167 prompts, in a vibration manner, the user A that a voice message is received. In this case, the user A may listen to the voice message on the mobile phone 167.

At a third moment, the user B leaves the home of the user A, and the central control screen 161 detects that facial information sent by the camera 162 includes only the facial information of the user A. Therefore, the central control screen 161 exits the trusted visitor mode, enters the family member mode, and sends a family mode notification to the camera 162 and the smart large screen 163. After receiving the family mode notification, the camera 162 and the smart large screen 163 exit the trusted visitor mode and enter the family member mode.

At a fourth moment, the user B returns to the home of the user A. The camera 162 detects the facial information of the user B, and sends the facial information of the user B to the central control screen 161. Because the facial information of the user B is recorded in the trusted visitor feature library of the central control screen 161, the central control screen 161 may determine that the user B is a trusted visitor. In this case, the central control screen 161 enters the trusted visitor mode, and sends a second visitor mode notification to the camera 162 and the smart large screen 163. After receiving the second visitor mode notification, the camera 162 and the smart large screen 163 enter the trusted visitor mode.

It can be learned from the foregoing described method and example that, in the device control method provided in embodiments of this application, when determining that a visitor exists in the home area, the hub device may control the hub device and the smart home device to automatically enter the visitor mode, to protect privacy information of a family member and limit a sensitive operation, thereby protecting privacy security and personal and property security of the user.

In addition, when an administrator sets a plurality of different visitor types, different visitor types may correspond to different visitor modes, and different protection policies may be used in different visitor modes. The hub device may flexibly manage different types of visitors and provide different permissions for different types of visitors by managing visitor modes.

In addition, when a visitor intends to use a visitor device to control the hub device/smart home device, the visitor device may send an authorization request by scanning an authorization code. When the target device agrees to the authorization request, the visitor device can obtain a visitor permission. Different visitor permissions have different operation ranges. Therefore, in a manner of managing visitor permissions, a management device may not only meet a requirement of the visitor to use the visitor device to control the hub device/smart home device, but also prevent the visitor from viewing privacy information of the family member and performing a sensitive operation without authorization.

For a silent device that does not support the visitor mode, the hub device may assist the silent device in protecting privacy information and limiting a sensitive operation, to reduce a possibility that the silent device discloses the privacy information and performs the sensitive operation without authorization.

In addition, in addition to controlling the hub device and the smart home device to automatically enter the visitor mode, the hub device may further control the hub device and the smart home device to exit the visitor mode when a condition for exiting the visitor mode is met, so that the user does not need to perform an operation on each electronic device one by one. This reduces operation content of the user, and improves user experience.

It should be understood that sequence numbers of the steps do not mean execution sequences in the foregoing embodiments. The execution sequences of the processes should be determined based on functions and internal logic of the processes, and should not constitute any limitation on the implementation processes of embodiments of this application.

The following describes in detail, from a perspective of a hub device, another device control method provided in an embodiment of this application. Refer to FIG. 22. The device control method provided in this embodiment includes the following steps.

S221: When a user exists in a home area, obtain a user identity of the user, where the user identity includes a family member and/or a visitor.

It should be noted that when a user exists in a home area, the hub device may obtain a user identity of the user. The user identity may include a family member and/or a visitor.

In a process of identifying the user identity, a detection device may detect user characteristics of the user. The user characteristics may include one or more types of characteristic data such as facial information, fingerprint data, an access control password, sensor data, and voiceprint data.

After detecting the user characteristics, the detection device may directly send the user characteristics to the hub device.

After obtaining the user characteristics, the hub device may compare the user characteristics with pre-stored characteristics, to determine a user device of the user.

The pre-stored characteristics refer to pre-stored family information. The family information is used to distinguish the family member from a visitor. The family information may include one or more pieces of information such as an administrator password, facial information of the family member, fingerprint data of the family member, voiceprint data of the family member, and a quantity of family members.

Alternatively, the detection device may locally process the user characteristics, to obtain a detection result. Then, the detection device may send a detection result to the hub device.

When the hub device receives the detection result, the hub device may determine the user identity of the user based on the detection result.

S222: Enter a visitor mode when the user identity includes the visitor, and indicate a controllable device to enter the visitor mode; and/or assist a silent device in protecting privacy information and/or limiting a sensitive operation.

The controllable device is an electronic device that supports the visitor mode, the visitor mode is used to protect privacy information and/or limit a sensitive operation, and the silent device is an electronic device that does not support the visitor mode.

It should be noted that, after obtaining the user identity of the user, the hub device may identify whether the user identity includes a visitor.

If the foregoing user identity includes a visitor, it indicates that a visitor enters the home area. In this case, to prevent the visitor from viewing privacy information of a family member or performing a sensitive operation without authorization, the hub device may enter the visitor mode, and indicate the controllable device to enter the visitor mode.

The controllable device is an electronic device that supports the visitor mode. The visitor mode is used to protect privacy information and/or limit a sensitive operation.

Moreover, for a silent device that does not support the visitor mode, the hub device may assist the silent device in protecting privacy information and/or limiting a sensitive operation.

According to the foregoing method, the hub device can prevent a visitor from randomly viewing privacy information of a family member and performing a sensitive operation without authorization. This effectively reduces possibilities of privacy disclosure and an unauthorized operation, ensures privacy security and personal and property security of the user, and features strong practicability and usability.

Optionally, the visitor mode includes one or more of the following operations:
anonymizing the privacy information, hiding the privacy information, hiding an access portal of the privacy information, prohibiting the sensitive operation from being performed, hiding an access portal of the sensitive operation, and performing identity verification when the sensitive operation is detected.

It should be noted that, in the visitor mode, the electronic device may protect the privacy information and limit the sensitive operation by using one or more of protection policies such as anonymizing the privacy information, hiding the privacy information, hiding an access portal of the privacy information, shielding the sensitive operation, hiding the access portal of the sensitive operation, and performing identity verification when the sensitive operation is detected.

For example, in some examples, when the electronic device receives a voice message in the visitor mode, the electronic device may anonymize the voice message, and play "You have a new voice message. Please view it on the personal device", to hide detailed content of privacy information, and prompts a family member to check the voice message on the personal device.

In some other examples, when the electronic device enters the visitor mode, privacy information such as an album or contacts may be directly hidden, or an access portal of the privacy information may be hidden.

In some other examples, when the electronic device enters the visitor mode, if the electronic device detects a sensitive operation, the electronic device may shield the sensitive operation, and does not respond to the sensitive operation.

In some other examples, when the electronic device enters the visitor mode, the electronic device may directly hide an access portal of a sensitive operation, so that the user cannot enter an operation interface of the sensitive operation and cannot perform the sensitive operation.

In some other examples, when the electronic device enters the visitor mode, if the electronic device detects a sensitive operation, the electronic device may perform identity verification on the user.

If the identity verification succeeds, it indicates that the user performing the sensitive operation is a family member, and the electronic device may respond to the sensitive operation. Alternatively, if the identity verification fails, it indicates that the user performing the sensitive operation is not a family member, and the electronic device may not respond to the sensitive operation.

In some other examples, the electronic device may alternatively use another protection policy to protect privacy information and limit a sensitive operation. A protection policy used by the electronic device is not limited in this embodiment of this application.

Optionally, the assisting a silent device in protecting privacy information and/or limiting a sensitive operation includes one or more of the following operations:
when receiving a sensitive message sent to the silent device, anonymizing the sensitive message to obtain an anonymous message, and forwarding the anonymous message to the silent device, where the sensitive message includes the privacy information;
when receiving a sensitive message sent to the silent device, intercepting the sensitive message; and
when receiving a device control instruction sent by the silent device, intercepting the device control instruction, and/or prohibiting an operation corresponding to the device control instruction from being performed.

It should be noted that, when assisting the silent device in protecting the privacy information and/or restricting the sensitive operation, the hub device may select a proper assisting manner based on an actual scenario.

For example, in some examples, when the hub device receives a sensitive message sent to the silent device, because the sensitive message includes privacy information, the hub device may anonymize the sensitive message to hide the privacy information in the sensitive information and obtain an anonymous message. Then, the hub device forwards the anonymous message to the silent device, to reduce a possibility that the silent device discloses privacy information of a family member.

In some other examples, when the hub device receives a sensitive message sent to the silent device, the hub device may alternatively directly intercept the sensitive message, and forward the sensitive message to a personal device of a family member, to protect privacy information of the family member.

In some other examples, when the hub device receives a device control instruction sent by the silent device, if the device control instruction is used to control another electronic device, the hub device may directly intercept the device control instruction. Alternatively, if the device control instruction is used to control the hub device, the hub device may not respond to the device control instruction. By intercepting the device control instruction and/or prohibiting the device control instruction from being performed, the hub device can reduce a possibility that a visitor performs a sensitive operation by using the silent device.

In some other examples, the hub device may alternatively assist the silent device in protecting privacy information and/or limiting a sensitive operation in another assisting manner. A specific form of the foregoing assisting manner is not limited in embodiments of this application.

Optionally, after the entering a visitor mode when the user identity includes the visitor, and indicating a controllable device to enter the visitor mode; and/or assisting a silent device in protecting privacy information and/or limiting a sensitive operation, the method includes:
when a preset exit condition is met, exiting the visitor mode, and indicating the controllable device to exit the visitor mode; and/or skipping assisting the silent device in protecting privacy information and/or limiting a sensitive operation.

It should be noted that, when the preset exit condition is met, the hub device may control the hub device and a controllable device to automatically exit the visitor mode, and stop assisting the silent device in protecting privacy information and/or limiting a sensitive operation, so that the user does not need to perform an operation on each electronic device one by one. This reduces operation content of the user, and improves user experience.

Optionally, the preset exit condition includes one or more of the following conditions:
an exit operation of a family member is detected, no user exists in the home area, and no visitor exists in the home area.

It should be noted that the preset exit condition may be set based on an actual requirement. For example, in some examples, the preset exit condition may be that an exit operation of a family member is detected. In this case, when the hub device detects an exit operation, the hub device may perform identity verification on the user. If the identity verification succeeds, the hub device may respond to the exit operation; or if the identity verification fails, the hub device does not respond to the exit operation.

In some other examples, the preset exit condition may be that no user exists in the home area. In this case, when the hub device determines that all users leave the home area, the hub device may control the hub device and each controllable device to automatically exit the visitor mode, and stop assisting the silent device in protecting privacy information and/or limiting a sensitive operation.

In some other examples, the preset exit condition may be that no visitor exists in the home area. In this case, when the hub device determines that all visitors leave the home area, the hub device may control the hub device and each controllable device to automatically exit the visitor mode, and stop assisting the silent device in protecting privacy information and/or limiting a sensitive operation.

In some other examples, the preset exit condition may alternatively be other content. Specific content of the preset exit condition is not limited in embodiments of this application.

Optionally, the visitor includes a first-type visitor and a second-type visitor, and an operation permission of the first-type visitor is higher than an operation permission of the second-type visitor.

It should be noted that a type of the foregoing visitor may be set based on an actual requirement. For example, in some embodiments, an administrator (a device vendor or a holder of the hub device) may uniformly define a user other than a family member as a visitor. In some other embodiments, the administrator may classify visitors into a first-type visitor and a second-type visitor. The first-type visitor may be a visitor like a relative or an acquaintance who has a relatively close relationship with the family member. The second-type visitor may be a visitor like an unfamiliar friend, a door-to-door maintenance personnel, or a property management personnel who drops by. The operation permission of the first-type visitor is higher than the operation permission of the second-type visitor. In some other embodiments, the administrator may alternatively classify visitors into a first-level visitor, a second-level visitor, and a third-level visitor, and set a corresponding permission for each level of visitor. In some other embodiments, the administrator may alternatively classify types of visitors in another manner. A specific manner in which the administrator classifies types of visitors is not limited in embodiments of this application.

Optionally, the visitor mode includes a first visitor mode and a second visitor mode.

The entering a visitor mode when the user identity includes the visitor, and indicating a controllable device to enter the visitor mode includes:
entering the first visitor mode when the user identity includes the first-type visitor but does not include the second-type visitor, and indicating the controllable device to enter the first visitor mode; and
entering the second visitor mode when the user identity includes the second-type visitor, and indicating the controllable device to enter the second visitor mode.

It should be noted that when the visitor includes the first-type visitor and the second-type visitor, the visitor mode may include the first visitor mode and the second visitor mode.

When the user identity includes the first-type visitor but does not include the second-type visitor, the hub device may control the hub device and the controllable device to enter the first visitor mode having a higher operation permission.

When the user identity includes the second-type visitor, regardless of whether the first-type visitor exists in the home area, the hub device may control the hub device and a visitor device to enter the second visitor mode having a lower operation permission.

According to the foregoing method, the hub device can manage different types of visitors more flexibly, and provide different permissions for different types of visitors, to prevent a low-permission visitor from stealing an operation permission of a high-permission visitor, and protect privacy security and personal and property security of a family member.

Optionally, after the entering the second visitor mode, and indicating the controllable device to enter the second visitor mode, the method further includes:
entering a family member mode when an exit operation of a family member is detected, and indicating the controllable device to enter the family member mode; or
entering the first visitor mode when an exit operation of a family member is detected, and indicating the controllable device to enter the first visitor mode.

It should be noted that when the hub device is in the second visitor mode and the hub device detects an exit operation of the family member, the hub device may control the hub device and the controllable device to directly enter the family mode.

However, if the hub device directly controls the hub device and the controllable device to enter the family member mode, the visitor may steal a permission of the family member, and view privacy information of the family member and/or perform a sensitive operation without authorization.

Therefore, when the hub device is in the second visitor mode, and the hub device detects the exit operation of the family member, the hub device may alternatively control the hub device and the controllable device to enter the first visitor mode. This can meet a requirement of a user for improving a permission of a visitor, and can further prevent the visitor from using the permission of the family member without approval in the family member mode, thereby protecting privacy security and personal and property security of the family member.

Optionally, after the entering a visitor mode when the user includes the visitor, the method further includes:
displaying an authorization code, where the authorization code is used to request a visitor permission from a target device, and the target device is a personal device of the family member.

It should be noted that, in some scenarios, the visitor may intend to use a personal device of the visitor to control an electronic device in the home area.

In this case, the hub device may display the authorization code on a display. The authorization code is used to request a visitor permission from a target device, and the target device is a personal device of the family member.

After the visitor scans the authorization code by using a visitor device (namely, the personal device of the visitor), the visitor device may send an authorization request to the target device.

When the target device agrees to the authorization request, the visitor device can obtain a visitor permission.

When the target device rejects the authorization request, the visitor device cannot obtain a visitor permission.

Optionally, the sensitive operation includes a home management operation and/or a control operation on an electronic device having a security protection function.

It should be noted that the sensitive operation is an operation that may affect personal and property safety of the family member.

Specifically, the sensitive operation may include any one or more of operations such as a family management operation and a control operation on a security protection device.

The family management operation is an operation like changing family information, sharing a permission, or changing a permission. The security protection device is an electronic device having a security protection function.

Optionally, when the user characteristics include a quantity of users, and the pre-stored characteristics include a quantity of family members, the obtaining user characteristics of the user, and comparing the user characteristics with pre-stored characteristics, to determine the user identity of the user includes:
comparing the quantity of users with the quantity of family members; and
if the quantity of users is greater than the quantity of family members, determining that the user identity of the user includes the visitor.

It should be noted that the foregoing user characteristics may include the quantity of users, and the foregoing pre-stored characteristics may include the quantity of family members.

When the hub device obtains the quantity of users, the hub device may compare the quantity of users with the quantity of family members.

If the quantity of users is less than or equal to the quantity of family members, it indicates that there may be no visitor in the home area.

If the quantity of users is greater than the quantity of family members, it indicates that a visitor exists in the home area, and the hub device may determine that the user identity of the user includes the visitor.

Optionally, the quantity of family members is determined based on a quantity of people staying in the home area every day during a historical time period.

It should be noted that the quantity of family members may be determined by the hub device based on a quantity of people staying in the home area every day during a historical time period.

For example, it is assumed that the historical time period is a latest week, and the hub device detects that a mode of the quantity of people staying in every day during the time period of the latest week is 3. In this case, the hub device may determine that the quantity of family members is 3.

Corresponding to the device control method in the embodiments, FIG. 23 is a block diagram of a structure of a device control apparatus according to an embodiment of this application. For ease of description, only parts related to embodiments of this application are shown.

The apparatus may be used in a hub device. As shown in FIG. 23, the apparatus includes:
an identity obtaining module 231, configured to: when a user exists in a home area, obtain a user identity of the user, where the user identity includes a family member and/or a visitor; and
a visitor protection module 232, configured to: enter a visitor mode when the user identity includes the visitor, and indicate a controllable device to enter the visitor mode; and/or assist a silent device in protecting privacy information and/or limiting a sensitive operation, where
the controllable device is an electronic device that supports the visitor mode, the visitor mode is used to protect privacy information and/or limit a sensitive operation, and the silent device is an electronic device that does not support the visitor mode.

Optionally, the visitor mode includes one or more of the following operations:
anonymizing the privacy information, hiding the privacy information, hiding an access portal of the privacy information, prohibiting the sensitive operation from being performed, hiding an access portal of the sensitive operation, and performing identity verification when the sensitive operation is detected.

Optionally, the assisting a silent device in protecting privacy information and/or limiting a sensitive operation includes one or more of the following operations:
when a sensitive message sent to the silent device is received, anonymizing the sensitive message to obtain an anonymous message, and forwarding the anonymous message to the silent device, where the sensitive message includes the privacy information;
when a sensitive message sent to the silent device is received, intercepting the sensitive message; and
when a device control instruction sent by the silent device is received, intercepting the device control instruction, and/or prohibiting an operation corresponding to the device control instruction from being performed.

Optionally, the apparatus further includes:
a visitor exit module, configured to: when a preset exit condition is met, exit the visitor mode, and indicate the controllable device to exit the visitor mode; and/or skip assisting the silent device in protecting privacy information and/or limiting a sensitive operation.

Optionally, the preset exit condition includes one or more of the following conditions:
an exit operation of a family member is detected, no user exists in the home area, and no visitor exists in the home area.

Optionally, the visitor includes a first-type visitor and a second-type visitor, and an operation permission of the first-type visitor is higher than an operation permission of the second-type visitor.

Optionally, the visitor mode includes a first visitor mode and a second visitor mode.

The visitor protection module 232 includes:
a first sub-module, configured to: enter the first visitor mode when the user identity includes the first-type visitor but does not include the second-type visitor, and indicate the controllable device to enter the first visitor mode; and
a second sub-module, configured to: enter the second visitor mode when the user identity includes the second-type visitor, and indicate the controllable device to enter the second visitor mode.

Optionally, the apparatus further includes:
a mode switching module, configured to: enter a family member mode when an exit operation of a family member is detected, and indicate the controllable device to enter the family member mode; or
a mode switching module, configured to: enter the first visitor mode when an exit operation of a family member is detected, and indicate the controllable device to enter the first visitor mode.

Optionally, the apparatus further includes:
an authorization display module, configured to display an authorization code, where the authorization code is used to request a visitor permission from a target device, and the target device is a personal device of the family member.

Optionally, the sensitive operation includes a home management operation and/or a control operation on an electronic device having a security protection function.

Optionally, the identity obtaining module 231 is configured to: obtain user characteristics of the user, and compare the user characteristics with pre-stored characteristics, to determine the user identity of the user; and/or
the identity obtaining module 231 is configured to: receive a detection result sent by a detection device, and determine the user identity of the user based on the detection result, where the detection device is an electronic device having a user identity detection function.

Optionally, when the user characteristics include a quantity of users, and the pre-stored characteristics include a quantity of family members, the identity obtaining module 231 includes:
a comparison sub-module, configured to compare the quantity of users with the quantity of family members; and
a determining sub-module, configured to: if the quantity of users is greater than the quantity of family members, determine that the user identity of the user includes the visitor.

Optionally, the quantity of family members is determined based on a quantity of people staying in the home area every day during a historical time period.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in another manner. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated module/unit is implemented in a form of a software functional unit and sold or used as an independent product, the integrated module/unit may be stored in a computer-readable storage medium. Based on such an understanding, in this application, all or some of the processes in the methods in the foregoing embodiments may alternatively be implemented by using a computer program to instruct related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file form, some intermediate forms, or the like. The computer-readable storage medium may include any entity or apparatus that can carry the computer program code, a recording medium, a USB flash drive, a removable hard disk, a magnetic disk, a compact disc, a computer memory, a read-only memory (ROM, Read-Only Memory), a random access memory (RAM, Random Access Memory), an electrical carrier signal, a telecommunication signal, a software distribution medium, and the like. It should be noted that content included in the computer-readable storage medium may be appropriately added or deleted based on requirements of legislation and patent practice in a jurisdiction. For example, in some jurisdictions, according to legislation and patent practice, the computer-readable storage medium does not include the electrical carrier signal or the telecommunication signal.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device control method, applied to a hub device, wherein the method comprises:
when a user exists in a home area, obtaining a user identity of the user, wherein the user identity comprises a family member and/or a visitor; and
entering a visitor mode when the user identity comprises the visitor, and indicating a controllable device to enter the visitor mode; and/or assisting a silent device in protecting privacy information and/or limiting a sensitive operation, wherein
the controllable device is an electronic device that supports the visitor mode, the visitor mode is used to protect privacy information and/or limit a sensitive operation, and the silent device is an electronic device that does not support the visitor mode.

2. The method according to claim 1, wherein the visitor mode comprises one or more of the following operations:
anonymizing the privacy information, hiding the privacy information, hiding an access portal of the privacy information, prohibiting the sensitive operation from being performed, hiding an access portal of the sensitive operation, and performing identity verification when the sensitive operation is detected.

3. The method according to claim 1 or 2, wherein the assisting a silent device in protecting privacy information and/or limiting a sensitive operation comprises one or more of the following operations:
when receiving a sensitive message sent to the silent device, anonymizing the sensitive message to obtain an anonymous message, and forwarding the anonymous message to the silent device, wherein the sensitive message comprises the privacy information;
when receiving a sensitive message sent to the silent device, intercepting the sensitive message; and
when receiving a device control instruction sent by the silent device, intercepting the device control instruction, and/or prohibiting an operation corresponding to the device control instruction from being performed.

4. The method according to any one of claims 1 to 3, wherein after the entering a visitor mode when the user identity comprises the visitor, and indicating a controllable device to enter the visitor mode; and/or assisting a silent device in protecting privacy information and/or limiting a sensitive operation, the method comprises:
when a preset exit condition is met, exiting the visitor mode, and indicating the controllable device to exit the visitor mode; and/or skipping assisting the silent device in protecting privacy information and/or limiting a sensitive operation.

5. The method according to claim 4, wherein the preset exit condition comprises one or more of the following conditions:
an exit operation of a family member is detected, no user exists in the home area, and no visitor exists in the home area.

6. The method according to any one of claims 1 to 5, wherein the visitor comprises a first-type visitor and a second-type visitor, and an operation permission of the first-type visitor is higher than an operation permission of the second-type visitor.

7. The method according to claim 6, wherein the visitor mode comprises a first visitor mode and a second visitor mode; and
the entering a visitor mode when the user identity comprises the visitor, and indicating a controllable device to enter the visitor mode comprises:
entering the first visitor mode when the user identity comprises the first-type visitor but does not comprise the second-type visitor, and indicating the controllable device to enter the first visitor mode; and
entering the second visitor mode when the user identity comprises the second-type visitor, and indicating the controllable device to enter the second visitor mode.

8. The method according to claim 7, wherein after the entering the second visitor mode, and indicating the controllable device to enter the second visitor mode, the method further comprises:
entering a family member mode when an exit operation of a family member is detected, and indicating the controllable device to enter the family member mode; or
entering the first visitor mode when an exit operation of a family member is detected, and indicating the controllable device to enter the first visitor mode.

9. The method according to any one of claims 1 to 8, wherein after the entering a visitor mode when the user comprises the visitor, the method further comprises:
displaying an authorization code, wherein the authorization code is used to request a visitor permission from a target device, and the target device is a personal device of the family member.

10. The method according to any one of claims 1 to 9, wherein the sensitive operation comprises a home management operation and/or a control operation on an electronic device having a security protection function.

11. The method according to any one of claims 1 to 10, wherein the obtaining a user identity of the user comprises:
obtaining user characteristics of the user, and comparing the user characteristics with pre-stored characteristics, to determine the user identity of the user; and/or
receiving a detection result sent by a detection device, and determining the user identity of the user based on the detection result, wherein the detection device is an electronic device having a user identity detection function.

12. The method according to claim 11, wherein when the user characteristics comprise a quantity of users, and the pre-stored characteristics comprise a quantity of family members, the obtaining user characteristics of the user, and comparing the user characteristics with pre-stored characteristics, to determine the user identity of the user comprises:
comparing the quantity of users with the quantity of family members; and
if the quantity of users is greater than the quantity of family members, determining that the user identity of the user comprises the visitor.

13. The method according to claim 12, wherein the quantity of family members is determined based on a quantity of people staying in the home area every day during a historical time period.

14. A hub device, comprising a memory, a processor, and a computer program that is stored in the memory and that can be run on the processor, wherein the processor is configured to implement the method according to any one of claims 1 to 13 when executing the computer program.

15. A computer-readable storage medium, wherein the computer-readable storage medium is configured to store a computer program, and when the computer program is executed by a processor, the method according to any one of claims 1 to 13 is implemented.

16. A computer program product, wherein when the computer program product is configured to run on a control device, the control device is enabled to perform the method according to any one of claims 1 to 13.

17. A chip system, wherein the chip system comprises a memory and a processor, and the processor is configured to execute a computer program stored in the memory, to implement the method according to any one of claims 1 to 13.
